# EUROPEAN PATENT APPLICATION

(11) **EP 4 845 214 A1**
(43) Date of publication of application: **25.11.2026**
(21) Application number: 24917659.5
(22) Date of filing: 16.01.2024
(51) Int. Cl.: H04W 28/10

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: Taor, Simon Edward William
(86) International application number: PCT/CN2024/072563
(87) International publication number: WO 2025/152032

(57) **Abstract**

A wireless communication method and a communication device are provided. The method includes: receiving, by a first device, a first frame sent by a second device; where the first frame is used to indicate information related to out-of-order delivery in a block acknowledgment mechanism. Based on the first frame, the first device and the second device can negotiate and determine the out-of-order delivery scenario in the block acknowledgment mechanism, thereby ensuring that out-of-order delivery is effectively applied to data transmission.

## Description

### TECHNICAL FIELD

The disclosure relates to the field of communication technologies, and more specifically, to a wireless communication method and a communication device.

### BACKGROUND

The block acknowledge (BA) mechanism improves channel efficiency by aggregating multiple acknowledgements (Acks) into one frame. A station or a multi-link device (MLD) that transmits data using the block Ack mechanism may be referred to as an originator, and the intended receiving station or MLD of the data may be referred to as a recipient. The recipient may include a receive reordering buffer control for each transmission address (TA)/traffic identifier (TID). The receive reordering buffer may be responsible for reordering received data units, so that the data units are finally delivered to the next medium access control (MAC) procedure in the order of receive serial numbers (SNs). With the development of technology, some techniques have proposed an out-of-order delivery mechanism in the block Ack mechanism.

### SUMMARY

The disclosure provides a wireless communication method and a communication device. Various aspects involved in the disclosure are described below.

In a first aspect, a wireless communication method is provided. The method includes: a first device receives a first frame sent by a second device; where the first frame is used to indicate information related to out-of-order delivery in a block acknowledge (Ack) mechanism.

In a second aspect, a wireless communication method is provided. The method includes: a second device sends a first frame to a first device; where the first frame is used to indicate information related to out-of-order delivery in a block Ack mechanism.

In a third aspect, a communication device is provided, the communication device being a first device, and the communication device includes: a first receiving unit configured to receive a first frame sent by a second device; where the first frame is used to indicate information related to out-of-order delivery in a block Ack mechanism.

In a fourth aspect, a communication device is provided, the communication device being a second device, and the communication device includes: a first sending unit configured to send a first frame to a first device; where the first frame is used to indicate information related to out-of-order delivery in a BA mechanism.

In a fifth aspect, a communication device is provided, including a processor and a memory, the memory being configured to store one or more computer programs, and the processor being configured to invoke the one or more computer programs in the memory to cause the communication device to perform part or all of the steps of the methods in the above aspects.

In a sixth aspect, an embodiment of the disclosure provides a communication system, the system including the above communication device. In another possible design, the system may also include other devices that interact with the communication device in the solutions provided by the embodiments of the disclosure.

In a seventh aspect, an embodiment of the disclosure provides a computer-readable storage medium, the computer-readable storage medium storing a computer program, the computer program causing a communication device to perform part or all of the steps of the methods in the above aspects.

In an eighth aspect, an embodiment of the disclosure provides a computer program product, where the computer program product includes a non-transitory computer-readable storage medium storing a computer program, the computer program being operable to cause a communication device to perform part or all of the steps of the methods in the above aspects. In some implementations, the computer program product may be a software installation package.

In a ninth aspect, an embodiment of the disclosure provides a chip, the chip including a memory and a processor, the processor being capable of invoking and running a computer program from the memory to implement part or all of the steps described in the methods of the above aspects.

Based on the first frame, the first device and the second device can indicate and determine the situation of out-of-order delivery in the block Ack mechanism, thereby ensuring that out-of-order delivery is effectively applied to data transmission.

### BRIEF DESCRIPTION OF THE DRAWINGS

FIG. 1 is a schematic diagram of a wireless communication system to which embodiments of the disclosure are applied.
FIG. 2 is an example of an out-of-order delivery mechanism.
FIG. 3 is an example of another out-of-order delivery mechanism.
FIG. 4 is a schematic flowchart of a wireless communication method provided in an embodiment of the disclosure.
FIG. 5 is an example format diagram of a first element provided in an embodiment of the disclosure.
FIG. 6 is an example format diagram of an Out-of-Order Delivery Control field provided in an embodiment of the disclosure.
FIG. 7 is an example format diagram of an Out-of-Order Delivery Parameter Set field provided in an embodiment of the disclosure.
FIG. 8 is an example format diagram of a Condition Parameter field provided in an embodiment of the disclosure.
FIG. 9 is a schematic diagram of behaviors of an originator and a recipient provided in an embodiment of the disclosure.
FIG. 10 is a schematic structural diagram of a communication device provided in an embodiment of the disclosure.
FIG. 11 is a schematic structural diagram of another communication device provided in an embodiment of the disclosure.
FIG. 12 is a schematic structural diagram of an apparatus for communication provided in an embodiment of the disclosure.

### DETAILED DESCRIPTION

The technical solutions in this application will be described below with reference to the accompanying drawings.

### Communication System

The technical solutions of the embodiments of the disclosure can be applied to various communication systems, for example: wireless local area networks (WLANs), wireless fidelity (WiFi), high performance radio local area networks (HIPERLAN), wide area networks (WANs), cellular networks, or other communication systems. As another example, the technical solutions provided in the embodiments of the disclosure can be applied to communication systems adopting the 802.11 standard. Illustratively, the 802.11 standard includes, but is not limited to: the 802.11ax standard, the 802.11be standard, and next-generation 802.11 standards.

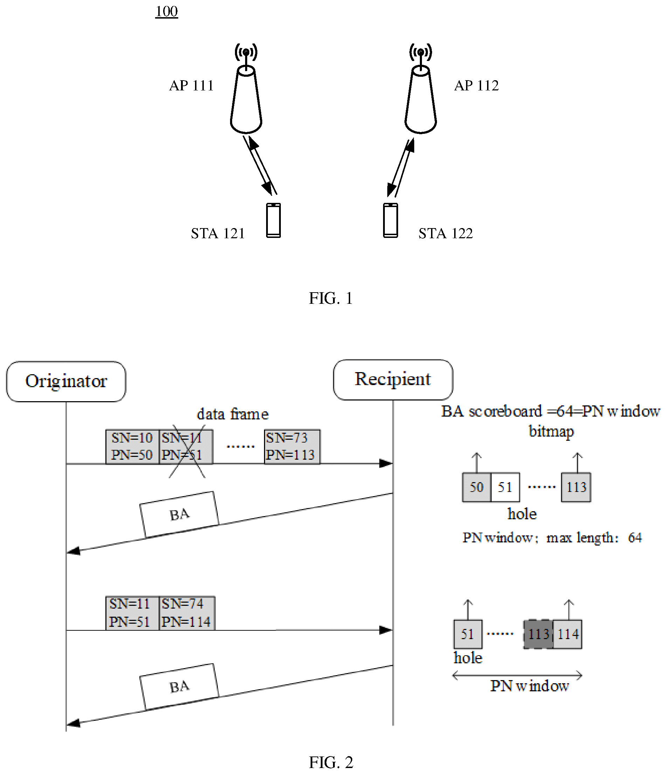

FIG. 1 illustrates a schematic diagram of a communication system to which the embodiments of the disclosure are applicable. Referring to FIG. 1, communication devices in a communication system 100 may include an access point (AP) 111, an AP 112, a station (STA) 121, and an STA 122, where the STA 121 may access a network via the AP 111, and the STA 122 may access a network via the AP 112.

In some implementations, an STA may establish an association relationship with one or more APs, and then communication may be performed between the STA and the APs having the association relationship. Referring to FIG. 1, communication may be performed between the AP 111 and the STA 121 after an association relationship is established, and communication may be performed between the AP 112 and the STA 122 after an association relationship is established.

In some implementations, communication in the communication system 100 may be communication between an AP and a non-AP STA, or communication between a non-AP STA and a non-AP STA, or communication between an STA and a peer STA, where the peer STA may refer to a device that communicates with the STA as a counterpart, for example, the peer STA may be an AP or a non-AP STA.

It should be understood that FIG. 1 illustratively illustrates two APs and two non-AP STAs, and the communication system 100 may also include a larger number of APs, or the communication system 100 may include other numbers of non-AP STAs, which is not limited in the embodiments of the disclosure.

In addition, the above communication system can be applied to multi-device coordination scenarios, such as multiple access points (multi-AP) coordination, or multi-station coordination scenarios.

In the embodiments of the disclosure, the names of the AP and/or the STA are not limited. In some scenarios, an AP may also be referred to as an AP STA, that is, in a sense, an AP is also a type of STA. In other scenarios, an STA may also be referred to as a non-AP STA.

In some scenarios, the above communication device may also be a "multi-link device (MLD)", that is, a device capable of communicating via multiple communication links, where the multiple communication links may include communication links of different frequency bands, for example, may include a millimeter wave frequency band and/or a low frequency band. Generally, if a multi-link device is an AP, the AP may also be referred to as a "multi-link AP". If a multi-link device is an STA, the STA may also be referred to as a "multi-link STA".

In the embodiments of the disclosure, an AP may be a device in a wireless network. An AP may be a communication server, a router, a switch, a bridge, or other communication entity, or the AP may include various forms of macro base stations, micro base stations, relay stations, etc. Certainly, the AP may also be a chip, a circuit, or a processing system in these various forms of devices, so as to implement the methods and functions of the embodiments of the disclosure. The AP can be applied to various scenarios, such as sensor nodes in a smart city (e.g., smart water meters, smart electricity meters, smart air detection nodes), smart devices in a smart home (e.g., smart cameras, projectors, display screens, televisions, stereos, refrigerators, washing machines, etc.), nodes in the Internet of Things, entertainment terminals (e.g., wearable devices such as AR, VR, etc.), smart devices in smart offices (e.g., printers, projectors, etc.), Internet of Vehicles devices in the Internet of Vehicles, and some infrastructure in daily life scenarios (e.g., vending machines, self-service navigation terminals in supermarkets, self-service checkout devices, self-service ordering machines), etc.

In some implementations, the role of an STA in a communication system is not absolute. In some scenarios, an STA may serve as an AP. For example, in a scenario where a mobile phone connects to a router, the mobile phone may be a non-AP STA, whereas in a scenario where the mobile phone serves as a hotspot for another mobile phone, the mobile phone acts as an AP.

In the embodiments of the disclosure, an STA in the embodiments of the disclosure may be a device with a wireless transceiver function, for example, may support the 802.11 series of protocols and can communicate with an AP or other STAs. For example, an STA is any user communication device that allows a user to communicate with an AP and thereby communicate with a WLAN. The STA may be, for example: User Equipment (UE), a Mobile Station (MS), a Mobile Terminal (MT), an access terminal, a subscriber unit, a subscriber station, a mobile station, a mobile terminal, a remote station, a remote terminal, a mobile device, a user terminal, a terminal, a wireless communication device, a user agent, or a user device, etc.

An STA in the embodiments of the disclosure may also be a device that provides voice/data connectivity to a user, for example, a handheld device with a wireless connection function, a vehicle-mounted device, etc. For example, it may be: a mobile phone, a tablet computer, a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, a vehicle-mounted device, a wearable device, a terminal device in a 5g network, or a terminal device in a future evolved public land mobile network (PLMN), which is not limited in the embodiments of the disclosure.

As an example but not a limitation, in the embodiments of the disclosure, the STA may also be a wearable device. A wearable device may also be referred to as a wearable intelligent device, which is a general term for devices that can be worn and are designed and developed by applying wearable technology to daily wear, such as glasses, gloves, watches, clothing, and shoes. For example: a smart watch or smart glasses, etc., as well as devices that focus only on a certain type of application function and need to be used in conjunction with other devices such as smart phones, such as various types of smart bracelets and smart jewelry for vital sign monitoring.

In addition, in the embodiments of the disclosure, the STA may also be a terminal device in an internet of things (IoT) system. IoT is an important part of future information technology development, and its main technical feature is to connect objects with a network through communication technologies, thereby realizing an intelligent network of human-machine interconnection and machine-to-machine interconnection. In the embodiments of the disclosure, IoT technology can achieve massive connections, deep coverage, and terminal power saving through, for example, narrow band (NB) technology.

In addition, in the embodiments of the disclosure, the STA may be a device in an internet of vehicles system. The communication methods in the internet of vehicles system are collectively referred to as V2X (X represents anything). For example, the V2X communication includes: vehicle-to-vehicle (V2V) communication, vehicle-to-infrastructure (V2I) communication, vehicle-to-pedestrian (V2P) communication, or vehicle-to-network (V2N) communication.

In addition, in the embodiments of the disclosure, the STA may also include sensors such as a smart printer, a train detector, and a gas station, and the main functions include collecting data (for some terminal devices), receiving control information and downlink data from an AP, and transmitting electromagnetic waves to transmit data to the AP.

In addition, the AP in the embodiments of the disclosure may be a device for communicating with an STA, and the AP may be a network device in a wireless local area network, and the AP can be used to communicate with an STA via a wireless local area network.

Introduced from the perspective of the communication mode supported by the AP, in some implementations, the AP may be a device supporting the 802.11be mode. The AP may also be a device supporting various current and future WLAN modes of the 802.11 family, such as 802.11ax, 802.11ac, 802.11n, 802.11g, 802.11b, and 802.11a.

Introduced from the perspective of the communication mode supported by the STA, in some implementations, the non-AP STA may support the 802.11be mode. The non-AP STA may also support various current and future wireless local area network (WLAN) modes of the 802.11 family, such as 802.11ax, 802.11ac, 802.11n, 802.11g, 802.11b, and 802.11a.

In the embodiments of the disclosure, the frequency band that WLAN technology can support is not limited. In some implementations, the frequency band that WLAN technology can support may include but is not limited to: low frequency bands (e.g., 2.4 GHz, 5 GHz, 6 GHz), and high frequency bands (e.g., 45 GHz, 60 GHz).

It should be understood that the specific forms of the STA and the AP in the embodiments of the disclosure are not specially limited, and are merely illustrative here.

### Block Ack Mechanism

The block Ack mechanism improves channel efficiency by aggregating multiple acknowledgements (Acks) into one frame. A station or an MLD that transmits data using the block Ack mechanism may be referred to as an originator, and the intended receiving station or MLD of the data may be referred to as a recipient.

Except for general link - groupcast with retries (GLK-GCR) block Ack or an unsolicited block Ack extension mechanism, the block Ack mechanism may be initialized by exchanging an add block Ack (ADDBA) request frame and/or an ADDBA response frame. After initialization, the originator may transmit a series of quality of service (QoS) data frames of a block to the recipient. A block may be started in a polled transmission opportunity (polled TXOP), may be started in a service period (SP), or may be started by winning a TXOP through enhanced distributed channel access (EDCA). The number of data frames in a block is limited, and the number of states maintained by the recipient is limited. A medium access control protocol data unit (MPDU) within a frame of a block may be acknowledged by a block Ack (BA) frame. The BA frame may be requested by a block Ack request (BlockAckReq) frame.

The originator may include a transmit buffer control. The transmit buffer control may use a transmit window to submit MPDUs for transmission and may release the transmit buffer upon receiving a BA frame from the recipient. The transmit window may be represented by WinStartO and WinSizeO. WinStartO represents a starting sequence number of the transmit window, and WinSizeO represents the number of buffers negotiated in the block Ack protocol. The originator may transmit QoS data frames having a TID matching the block Ack protocol in any order, as long as their sequence numbers are within the current transmit window.

It should be noted that a buffer may also be referred to as a cache.

The recipient may include a receive reordering buffer control for each transmission address (TA)/ traffic identifier (TID). The receive reordering buffer control may be used to control associated control states. The receive reordering buffer may be responsible for reordering medium access control service data units (MSDUs) or aggregated medium access control service data units (A-MSDUs) so that the MSDUs or A-MSDUs are finally delivered to the next MAC procedure (or MAC process) in the order of the receive sequence numbers. It may also be responsible for identifying and discarding duplicate frames (i.e., frames having the same sequence number).

For an MLD, the MLD follows the mechanism defined by the block Ack operation and also follows the additional rules defined by the block Ack procedure in multi-link operation. The MLD that transmits data using the block Ack mechanism may be referred to as a transmitting MLD or an originator MLD, and the MLD that is the intended recipient of the data may be referred to as a recipient MLD.

To establish a block Ack agreement between two MLDs, the originator MLD may send an ADDBA request frame to the recipient MLD through any affiliated STA operating on an enabled link. The transmission of the ADDBA request frame may depend on a power state of a non-AP STA operating on that link. The ADDBA request frame may indicate a TID for which the block Ack agreement is being established. After receiving the ADDBA request frame, the recipient MLD shall respond through any affiliated STA operating on an enabled link. The transmission of the ADDBA response frame may depend on the power state of the non-AP STA operating on that link. The recipient MLD may choose to accept or reject the request. If the recipient MLD accepts the request, a block Ack agreement may be established between the transmitting MLD and the recipient MLD for the TID specified in the ADDBA frame.

When a block Ack agreement is established for a certain TID between two MLDs, QoS data frames belonging to that TID may be exchanged between the two MLDs on any link to which the TID is mapped, according to TID-to-link mapping (TTLM) rules and multi-link power management rules.

The originator MLD may maintain a single common transmit buffer control. The single common transmit buffer control may use WinStartO and WinSizeO to handle each block Ack agreement negotiated with the recipient MLD, so as to submit MPDUs for transmission on links subject to TTLM restrictions. The transmitting MLD shall, upon receiving a BA frame corresponding to an MPDU, release the transmit buffer associated with the successfully received MPDU.

The recipient MLD maintains, under the block Ack agreement, a single common receive reordering buffer for each <peer MLD, TID> tuple, the buffer is regardless of the number of established links. The receive reordering buffer is responsible for reordering MSDUs or A-MSDUs so that the MSDUs or A-MSDUs are finally passed upward to the next MAC procedure in the order of receive sequence numbers. The buffer may also be responsible for identifying and discarding duplicate frames (i.e., frames having the same sequence number as a currently buffered frame) that are part of this block Ack agreement.

### In-Order Delivery

The following takes a Wi-Fi system as an example to describe the in-order delivery mechanism.

The MAC data service of Wi-Fi provides peer logical link control (LLC) sublayer entities or IEEE 802.1Q bridge ports, enabling the MAC to have the capability to exchange MSDUs. To support this service, a local MAC may use underlying physical layer services to transmit an MSDU to a peer MAC entity, where it is delivered to a peer LLC sublayer or bridge port. This asynchronous MSDU transmission is performed on a connectionless basis. By default, MSDU transmission is performed on a best-effort basis. However, the QoS facility uses TIDs to specify different services on a per-MSDU basis.

A station may maintain one or more sequence number (SN) spaces for determining sequence numbers of frames when transmitting frames. When multiple SN spaces are supported, an appropriate SN space may be determined by information in a MAC control field of a frame to be transmitted. For each MSDU (if not in an A-MSDU), A-MSDU, or medium access control management protocol data unit (MMPDU) transmitted using that SN space, each SN space may be represented by a modulo 4096 counter, incrementing by 1 starting from 0.

It should be noted that an SN space may also be referred to as an SN sequence. In addition, as described above, an SN space may be represented by a counter. Different SN spaces may correspond to different counters.

For an MLD, the MLD may maintain one or more SN spaces. These SN spaces may be used when an affiliated STA of the MLD transmits an individually addressed QoS data frame to an STA associated with the associated MLD to determine the sequence number of the frame. An SN space may include one counter or multiple counters.

It should be noted that MPDUs belonging to the same MSDU or A-MSDU shall have the same sequence number. Different MSDUs (if not in an A-MSDU), A-MSDUs, or MMPDUs have different sequence numbers in most cases.

Under the in-order delivery mechanism, after a block Ack agreement is negotiated and established for a certain TID between two devices (e.g., two stations or two MLDs), data units (or referred to as data packets) need to be processed based on a transmission order (e.g., sequence numbers) according to the currently defined operation rules of the block Ack mechanism. This restriction leads to a head-of-line blocking problem. The head-of-line blocking problem includes: at a recipient, if there is a hole in the data units stored in the reordering buffer (i.e., there is a data unit with a smaller sequence number that has not been received), the data units stored in the reordering buffer will not be delivered to the next MAC procedure; for a transmitter, the transmitter needs to transmit a data unit with a lower SN before transmitting a data unit with a higher SN. In the case of head-of-line blocking, data units may not be transmitted in a timely manner. In particular, for a data unit having a low-latency transmission requirement, the data unit may not be transmitted quickly due to head-of-line blocking, thereby causing the transmission of the data unit to fail to meet its QoS requirement.

Some techniques propose that an out-of-order delivery or reception processing mechanism for data units (referred to as an out-of-order delivery mechanism for short) can be introduced into the block Ack mechanism to solve the head-of-line blocking problem. The out-of-order delivery mechanism is described below.

### Out-of-order delivery

In some embodiments, for a specific TID, a medium access control service access point (MAC-SAP) is allowed to optionally deliver out-of-order data units. The number of specific TIDs may be limited to 1 or 2. This out-of-order delivery mechanism may be limited to use when establishing a flow that can benefit from out-of-order packet delivery (e.g., following corresponding subcarrier spacing (SCS) negotiation). Meanwhile, some embodiments may distinguish packet number (PN) spaces used for frames requiring out-of-order delivery and frames requiring in-order delivery. The following takes FIG. 2 as an example to describe this out-of-order delivery mechanism.

As illustrated in FIG. 2, although the recipient cannot successfully receive the MPDU with SN 11 and PN 51 at the beginning (i.e., the hole illustrated in FIG. 2), the recipient still delivers the received MPDUs (e.g., with PN 50 or 113) to the next MAC procedure, i.e., performs replay detection. Then, after receiving the MPDU with PN 51, the recipient delivers it together with subsequently received MPDUs to the next MAC procedure.

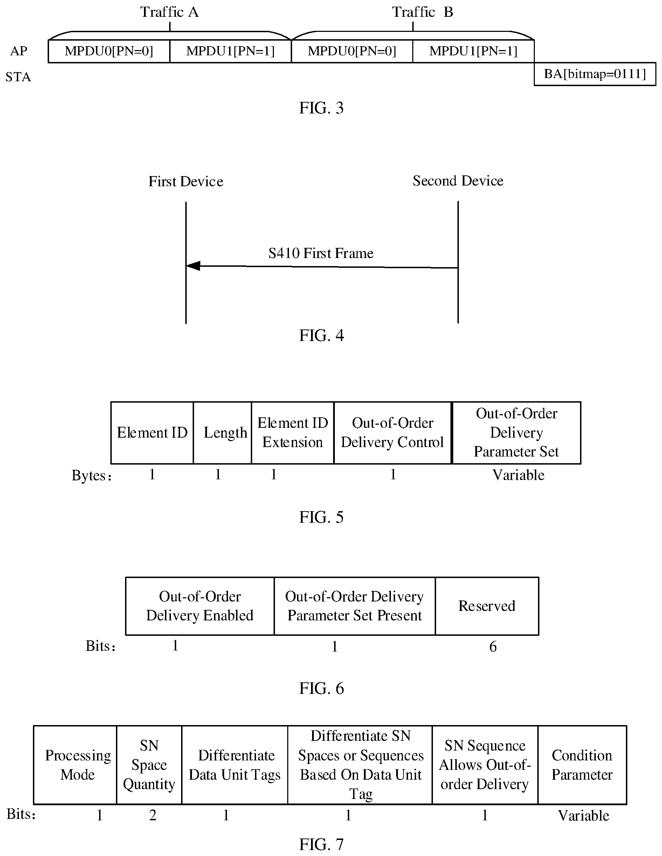

In some embodiments, different PN spaces may be set for an SN space. Different PN spaces may correspond to different replay counters. For example, for a low-latency data unit, an independent PN sequence and replay counter may be set, so as to process the low-latency data unit earlier. At the same time, replay detection for other data units in the same TID may also continue to be supported. The following takes FIG. 3 as an example to describe this out-of-order delivery mechanism.

As illustrated in FIG. 3, traffic flow A and traffic flow B may belong to different PN spaces (i.e., use different PN sequences). Correspondingly, traffic flow A and traffic flow B use different replay counters. As illustrated in FIG. 3, even if the STA does not successfully receive MPDU0 sent by the AP, the STA may still deliver MPDU2 and MPDU3 to an upper layer.

FIG. 4 is a schematic flowchart of a wireless communication method provided in an embodiment of the disclosure. The method illustrated in FIG. 4 may be performed by a first device and a second device. For example, the first device may be the originator described above; the second device may be the recipient. Alternatively, the first device may be the recipient described above; the second device may be the originator.

Step S410: A first device receives a first frame sent by a second device.

The first frame may be used to indicate information related to out-of-order delivery in a block Ack mechanism. For example, the first frame may be used to indicate information related to out-of-order delivery in a block Ack mechanism for a data unit corresponding to a first TID.

It should be noted that the block Ack mechanism described in the disclosure includes one of the following: a block Ack mechanism based on multi-link operation (MLO); a block Ack mechanism not based on MLO. For the block Ack mechanism based on MLO, both the first device and the second device may be MLD devices, and the first device and the second device have performed multi-link establishment. For the block Ack mechanism not based on MLO, one of the first device and the second device is a non-MLD device.

Based on the first frame, the first device and the second device can indicate and determine the situation of out-of-order delivery in the block Ack mechanism, thereby ensuring that out-of-order delivery is effectively applied to data transmission. In addition, for a low-latency data flow, indicating the situation of out-of-order delivery through the first frame can enable the low-latency data flow to apply out-of-order delivery, thereby meeting the latency requirement of the data flow.

It should be noted that the disclosure does not limit the specific implementation manner of out-of-order delivery.

For example, when out-of-order delivery is enabled, QoS data (i.e., individually addressed QoS data units) in one SN space are not delivered to the next MAC procedure (or a protocol layer above the physical layer (referred to as an upper layer for short)) in SN order. For example, when out-of-order delivery is enabled, even if a data unit received by a recipient has a larger SN than an unreceived data unit, the recipient may deliver the received data unit to the next MAC procedure for processing. That is, when out-of-order delivery is enabled, in a case where a sequence number (SN) of a received first data unit is greater than an SN of an unreceived second data unit, the first data unit can be delivered to the next MAC procedure. The first data unit and the second data unit may belong to the same SN space. That is, the first data unit and the second data unit are QoS data units corresponding to the same TID (e.g., the first TID), i.e., individually addressed QoS data units. Illustratively, the first SN space may correspond to multiple PN spaces. The multiple PN spaces may include a first PN space. Data units of the first PN space may be delivered to the next MAC procedure in PN order.

It should be noted that the fact that the SN of the first data unit is greater than the SN of the second data unit in the disclosure may mean that the time at which the originator or the transmitting end sends the first data unit at the MAC SAP (or the time at which the SN is assigned to the first data unit) is later than the time at which the second data unit is sent. It can be seen from this that, in a case where the time at which the originator sends the first data unit at the MAC SAP is later than the time at which the second data unit is sent, if out-of-order delivery is enabled, even if the recipient has not received the second data unit, the recipient may first deliver the first data unit to the next MAC procedure for processing.

As another example, when out-of-order delivery is enabled, data units of the same TID may adopt multiple SN spaces.

As another example, when out-of-order delivery is enabled, there may be a difference between the time order in which the originator sends data units at the MAC SAP and the time order in which the recipient receives data units at the MAC SAP. For example, if the originator sequentially sends data unit 0 and data unit 1 at the MAC SAP, and the receiving end sequentially receives data unit 1 and data unit 0 at the MAC SAP, since the receiving end first receives data unit 1 whose sending order is later, the transmission of data unit 0 and data unit 1 can be regarded as an out-of-order delivery.

As another example, when out-of-order delivery is enabled, data units may be delivered to the next MAC procedure in an increasing order of Sequence Number subfield values, but there may be gaps or holes in the Sequence Number subfield values of the data units delivered to the next MAC procedure.

It should be noted that the data unit referred to in the disclosure may include one or more of the following: an MSDU, an A-MSDU, an MPDU.

Optionally, the first frame may be used to accept or reject a first request. The first request may be related to a request for out-of-order delivery in the block Ack mechanism, for example. Optionally, the first frame may be used to configure information related to out-of-order delivery in the block Ack mechanism.

In some embodiments, the first frame may include an ADDBA response frame. In a case where the first frame includes an ADDBA response frame, the first device may be an originator, and the second device may be a recipient. Through the ADDBA response frame, the recipient can confirm information related to out-of-order delivery. That is, the first frame may be used to confirm information related to out-of-order delivery.

In some embodiments, the first frame may include an ADDBA request frame. In a case where the first frame includes an ADDBA request frame, the first device may be a recipient, and the second device may be an originator. Through the ADDBA request frame, the originator may indicate, suggest, or configure information related to out-of-order delivery to the recipient.

It can be seen from the above embodiments that either the originator or the recipient can send the first frame to indicate, suggest, configure, or confirm information related to out-of-order delivery.

In some embodiments, both the first device and the second device can send information related to out-of-order delivery. For example, the second device may send a first frame to the first device, and the first device may send a second frame to the second device. Both the first frame and the second frame may be related to out-of-order delivery. For example, the first device may send a second frame to the second device and expect to receive the first frame. As another example, in response to the second device receiving the second frame, the second device may send the first frame to the first device. That is, the first frame may be sent as a response to the second frame.

In some implementations, the second frame may be used to request configuration of information related to out-of-order delivery in the block Ack mechanism. In this case, the first frame may be used to confirm the configuration of the second frame. It should be noted that the disclosure does not limit the confirmation manner of the first frame. For example, the first frame may feed back an acknowledgement (ACK) or a negative acknowledgement (NACK). As another example, the second frame may include one or more fields to configure information related to out-of-order delivery in the block Ack mechanism, and the first frame may include the same one or more fields to confirm the information related to out-of-order delivery in the block Ack mechanism. The values of the same one or more fields in the first frame may be the same as the values of the one or more fields included in the second frame, to confirm the configuration of the second frame. Alternatively, the values of the same one or more fields in the first frame may be different from the values of the one or more fields included in the second frame, and the originator and the recipient may perform out-of-order delivery according to the indication of the first frame.

Optionally, the first frame may be determined based on the second frame. For example, the information related to out-of-order delivery in the first frame may be the same as the information related to out-of-order delivery in the second frame, to confirm that the second device uses the configuration in the first frame. As another example, in a case where the information related to out-of-order delivery in the first frame is different from the information related to out-of-order delivery in the second frame, the first device and the second device may perform out-of-order delivery according to the first frame.

For example, the second frame may include an ADDBA request frame. Correspondingly, the first frame may be an ADDBA confirmation frame. That is, the first device and the second device may interact through the ADDBA request frame and the ADDBA confirmation frame to request and confirm information related to out-of-order delivery in the block Ack mechanism.

In some embodiments, the information related to out-of-order delivery in the block Ack mechanism may be carried in one or more fields. For example, the one or more fields may include one or more of the following fields: an Out-of-Order Delivery Configuration field, and multiple Block Ack Parameter Set fields.

For example, the first frame may include one or more of the following fields: an Out-of-Order Delivery Configuration field, and one or more Block Ack Parameter Set fields. As another example, the second frame may include one or more of the following fields: an Out-of-Order Delivery Configuration field, and one or more Block Ack Parameter Set fields.

The Out-of-Order Delivery Configuration field may be used to configure or confirm part of the information related to out-of-order delivery in the block Ack mechanism. For example, the Out-of-Order Delivery Configuration field may be used to configure or confirm one or more of the following: whether to enable out-of-order delivery, and parameters of out-of-order delivery.

In some embodiments, the Out-of-Order Delivery Configuration field may carry a first element. That is, the information related to out-of-order delivery in the block Ack mechanism may be carried in the first element. Based on this, the first element may also be referred to as an out-of-order delivery configuration element.

The multiple Block Ack Parameter Set fields may correspond one-to-one to multiple SN spaces. For example, in a case where a data unit of the first TID adopts N SN spaces, the first frame may include N Block Ack Parameter Set fields. N may be an integer greater than 1. The N SN spaces may correspond one-to-one to the N Block Ack Parameter Set fields.

It should be noted that both the Out-of-Order Delivery Configuration field and the multiple Block Ack Parameter Set fields may be optional fields. For example, when out-of-order delivery is not enabled, the first frame or the second frame may not include the Out-of-Order Delivery Configuration field. As another example, when out-of-order delivery is not enabled, the first frame or the second frame may include only one Block Ack Parameter Set field.

The format of the first frame and the second frame is described below using an ADDBA request frame and an ADDBA response frame as an example.

The Action field of the ADDBA request frame may include part or all of the following fields: Category, Block Ack Action, Dialog Token, Block Ack Parameter Set, Block Ack Timeout Value, Block Ack Starting Sequence Control, GCR Group Address Element (optional), Multi-Band (optional), TCLAS (optional), ADDBA Extension (optional), EDMG Flow Control Extension Configuration (optional), SAR Configuration (optional), Out-of-Order Delivery Configuration (optional), Block Ack Parameter Set (optional). These fields are described below by way of example.

For the Dialog Token field, for an unsolicited block Ack extension protocol, the Dialog Token field may be set to 0; otherwise, the Dialog Token field may be set to a non-zero value selected by the STA.

For the Block Ack Parameter Set field, when the Ack agreement corresponds to multiple different SN sequences, the ADDBA request frame will have multiple Block Ack Parameter Set fields. One Block Ack Parameter Set field may be used to indicate a block Ack parameter set corresponding to one of the SN sequences. For example, a first Block Ack Parameter Set field may correspond to a block Ack parameter set corresponding to an SN sequence corresponding to a data unit that does not carry a target tag described below. By default, a second Block Ack Parameter Set field corresponds to a block Ack parameter set corresponding to an SN sequence corresponding to a data unit carrying the target tag.

It should be noted that in the disclosure, descriptions of each field in the Action field of the ADDBA request frame may refer to the above description or related technologies. Related technologies may include, for example, the description of the Action field in the IEEE 802.11 specification. For example, the Category field may refer to the definition of the Action field in the IEEE 802.11 specification. As another example, the Block Ack Action field may refer to the definition for each ADDBA request variant in the corresponding section of the IEEE 802.11 specification. As another example, the Dialog Token Field may refer to the definition in the Dialog Token field section of the IEEE 802.11 specification. As another example, the Block Ack Timeout Value field may refer to the definition in the Block Ack Timeout Value field section of the IEEE 802.11 specification. As another example, the Block Ack Parameter Set field may refer to the definition of the Block Ack Parameter Set field in the IEEE 802.11 specification. As another example, the Block Ack Starting Sequence Control field may refer to the definition in the Block Ack Starting Sequence Control field section of the IEEE 802.11 specification. As another example, the Block Ack Parameter Set field may refer to the definition in the Block Ack Parameter Set field section of the IEEE 802.11 specification.

The ADDBA response frame may include one or more of the following fields: Category, Block Ack Action, Dialog Token, Status Code, Block Ack Parameter Set, Block Ack Timeout Value, GCR Group Address Element (optional), Multi-Band (optional), TCLAS (optional), ADDBA Extension (optional), reserved, EDMG Flow Control Extension Configuration (optional), SAR Configuration (optional), Originator Preferred MCS Element (optional), Out-of-Order Delivery Configuration (optional), Block Ack Parameter Set (optional). These fields are described below by way of example.

The Dialog Token field may be copied from a corresponding received ADDBA request frame.

For the Block Ack Parameter Set field, when the block Ack agreement corresponds to multiple different SN sequences, the ADDBA response frame may have multiple Block Ack Parameter Set fields. One Block Ack Parameter Set field may be used to indicate a block Ack parameter set corresponding to one of the SN sequences. The first Block Ack Parameter Set field may correspond to a block Ack parameter set corresponding to an SN sequence corresponding to a data unit that does not carry the target tag. By default, the second Block Ack Parameter Set field corresponds to a block Ack parameter set corresponding to an SN sequence corresponding to a data unit carrying the target tag.

It should be noted that in the disclosure, descriptions of each field in the Action field of the ADDBA request frame may refer to the above description or related technologies. Related technologies may include, for example, the description of the Action field in the IEEE 802.11 specification. For example, the Category field may refer to the definition of the Action field in the IEEE 802.11 specification. As another example, the Status Code field may refer to the definition in the Status Code field section of the IEEE 802.11 specification. As another example, the Block Ack Timeout Value field may refer to the definition in the Block Ack Timeout Value field section of the IEEE 802.11 specification. As another example, the Block Ack Starting Sequence Control field may refer to the definition in the Block Ack Starting Sequence Control field section of the IEEE 802.11 specification.

In some embodiments, the information related to out-of-order delivery in the block Ack mechanism may include one or more of the following: whether to enable out-of-order delivery, and an out-of-order delivery parameter.

In a case where the information related to out-of-order delivery in the block Ack mechanism includes whether to enable out-of-order delivery, the originator may request whether the recipient enables out-of-order delivery for a corresponding TID (e.g., the first TID); the recipient may determine whether to enable out-of-order delivery for the corresponding TID. The corresponding TID may be indicated by a TID subfield in the Block Ack Parameter Set field included in the first frame or the second frame.

The Whether-to-Enable-Out-of-Order-Delivery field may be used to indicate whether to enable out-of-order delivery. For example, a value of 1 in the Whether-to-Enable-Out-of-Order-Delivery field may indicate that out-of-order delivery is enabled for the data unit corresponding to the corresponding TID; a value of 0 in the Whether-to-Enable-Out-of-Order-Delivery field may indicate that out-of-order delivery is not enabled for the data unit corresponding to the corresponding TID. As another example, a value of 0 in the Whether-to-Enable-Out-of-Order-Delivery field may indicate that out-of-order delivery is enabled for the data unit corresponding to the corresponding TID; a value of 1 in the Whether-to-Enable-Out-of-Order-Delivery field may indicate that out-of-order delivery is not enabled for the data unit corresponding to the corresponding TID.

The out-of-order delivery parameter may be used to indicate one or more parameters related to out-of-order delivery when out-of-order delivery is enabled. The out-of-order delivery parameter may be carried in an Out-of-Order Delivery Parameter Set field. The Out-of-Order Delivery Parameter Set field may include one or more subfields to indicate one or more types of out-of-order delivery parameters.

In some embodiments, the first frame or the second frame may include first information. The first information may be used to indicate whether the information related to out-of-order delivery in the block Ack mechanism includes the out-of-order delivery parameter. Alternatively, the first information may be used to indicate whether the Out-of-Order Delivery Parameter Set field is present.

For example, when out-of-order delivery is not enabled, the first information may indicate that the out-of-order delivery parameter is not present in the corresponding element. As another example, when out-of-order delivery is enabled, the first information may indicate that the out-of-order delivery parameter is not present in the corresponding element (e.g., preconfigured, pre-defined, or default out-of-order delivery parameters may be used).

In a case where the first information indicates that the out-of-order delivery parameter is not present, the field corresponding to the out-of-order delivery parameter may not be transmitted, thereby reducing communication resource usage.

Optionally, the first information may be carried in a field indicating whether the Out-of-Order Delivery Parameter Set field is present. For example, a value of 1 in the field indicating whether the Out-of-Order Delivery Parameter Set field is present may indicate that the out-of-order delivery configuration element includes the Out-of-Order Delivery Parameter Set field; a value of 0 in the field indicating whether the Out-of-Order Delivery Parameter Set field is present may indicate that the out-of-order delivery configuration element does not include the Out-of-Order Delivery Parameter Set field. As another example, a value of 0 in the field indicating whether the Out-of-Order Delivery Parameter Set field is present may indicate that the out-of-order delivery configuration element includes the Out-of-Order Delivery Parameter Set field; a value of 1 in the field indicating whether the Out-of-Order Delivery Parameter Set field is present may indicate that the out-of-order delivery configuration element does not include the Out-of-Order Delivery Parameter Set field.

As described above, the information related to out-of-order delivery in the block Ack mechanism may be carried in the Out-of-Order Delivery Configuration field. The Out-of-Order Delivery Configuration field may carry a first element. The information related to out-of-order delivery in the block Ack mechanism is described below through the first element, and how the first frame or the second frame indicates the information related to out-of-order delivery in the block acknowledgement mechanism is described.

FIG. 5 is an example format diagram of a first element provided in an embodiment of the disclosure. As illustrated in FIG. 5, the first element may include one or more of the following fields: Element ID, Length, Element ID Extension. The Element ID field may occupy 1 octet; the Length field may occupy 1 octet; the Element ID Extension field may occupy 1 octet. These fields may refer to definitions in related technologies. Related technologies may include, for example, the IEEE 802.11 specification. The first element may also include other fields, which is not limited in the disclosure.

As illustrated in FIG. 5, the first element may include an Out-of-Order Delivery Control field and/or an Out-of-Order Delivery Parameter Set field. The Out-of-Order Delivery Control field may occupy 1 octet, and the number of octets occupied by the Out-of-Order Delivery Parameter Set field may be variable.

FIG. 6 is an example format diagram of an Out-of-Order Delivery Control field provided in an embodiment of the disclosure. As illustrated in FIG. 6, the Out-of-Order Delivery Control field may include one or more of the following fields: Out-of-Order Delivery Enabled, Out-of-Order Delivery Parameter Set Present, Reserved. The Whether-to- Enable Out-of-Order Delivery field may occupy 1 bit; the Whether Out-of-Order Delivery Parameter Set Is Present field may occupy 1 bit. The Out-of-Order Delivery Control field may also include other fields, which is not limited in the disclosure.

The out-of-order delivery parameter is described below by way of example. The out-of-order delivery parameter may include one or more of the following: a processing mode, a first number, a first indication, a second indication, a third indication, and a condition parameter. Each is described below.

The processing mode may be used to indicate whether a data unit of the first TID adopts multiple SN spaces. For example, the processing mode may indicate whether QoS data corresponding to the first TID (i.e., individually addressed QoS data units) adopts only one SN space or may adopt one or more SN spaces.

The processing mode may be carried in a Processing Mode field. The encoding of the Processing Mode field may be as illustrated in Table 1.

**Table 1**

| Value of Processing Mode Field | Meaning |
|---|---|
| First value | For a given recipient, the QoS data corresponding to TID i (i.e., individually addressed QoS data units) may use only one SN space and one counter (or SN sequence), where for a recipient that is a STA, the counter is indexed by <Address 1, TID i>, and for a recipient that is an MLD, the counter is indexed by <the MLD MAC address of the STA identified by Address 1, TID i>. Address 1 may refer to the receiver address (RA) of the receiving station. |
| Second value | For a given recipient, the QoS data corresponding to TID i (i.e., individually addressed QoS data units) may use one or more SN spaces and one or more counters (or SN sequences). For example, for the SN space of a specific individually addressed QoS data unit, for a recipient that is a STA, the counter is indexed by <Address 1, TID i, flow identifier or data unit tag>, and for a recipient that is an MLD, the counter is indexed by <the MLD MAC address of the STA identified by Address 1, TID i, flow identifier or data unit tag>. Address 1 may refer to the RA of the receiving station. |

In Table 1, the first value may be 0, and the second value may be 1. Alternatively, the first value may be 1, and the second value may be 0.

The first quantity may be used to indicate the quantity of SN spaces adopted by the data unit of the first TID. The data unit of the first TID may include QoS data corresponding to the first TID (i.e., individually addressed QoS data units).

The first quantity may be carried in an SN Space Quantity field. The SN Space Quantity field may also be referred to as an SN Sequence Quantity field. The disclosure does not limit the method by which the SN Space Quantity field indicates the first quantity. For example, the value indicated by the SN Space Quantity field plus 1 may be the first quantity. As another example, the value indicated by the SN Space Quantity field itself may be the first quantity.

The first indication may be used to indicate whether to distinguish processing of the data unit of the first TID according to a tag of the data unit.

Optionally, a tag of a data unit may be used to classify the data unit. Alternatively, the tag of the data unit may be used to distinguish the corresponding data unit from other data units. For example, the tag of the data unit may include a first tag and/or a second tag. The first tag may be used to indicate that the corresponding data unit is a special data unit. Therefore, the first tag may also be referred to as a target tag or a special tag. The second tag may be used to indicate that the corresponding data unit is not a special data unit. The special data unit may include, for example, a "low-latency or urgent transmission" data unit. That is, the target tag may include: a low-latency tag; and/or an urgent delivery tag. As another example, the tag of the data unit may be tagged by a sub-traffic identifier (sub-TID).

In some implementations, in a case where processing of the data unit of the first TID is distinguished according to the tag of the data unit, the first device and/or the second device may distinguish processing between a data unit carrying the first tag and a data unit not carrying the first tag in the first TID. Alternatively, the first device and/or the second device may distinguish processing between a data unit carrying the first tag and a data unit carrying the second tag in the first TID.

In some implementations, in a case where processing of the data unit of the first TID is distinguished according to the tag of the data unit, the first device and/or the second device may distinguish processing between data units tagged with different sub-TIDs in the first TID.

The first indication may be carried in a field indicating whether to distinguish data unit tags. The disclosure does not limit the indication method of the field indicating whether to distinguish data unit tags. For example, a value of 1 in the field indicating whether to distinguish data unit tags may indicate that the first device and/or the second device distinguish processing based on the data unit tag; a value of 0 in the field indicating whether to distinguish data unit tags may indicate that the first device and/or the second device do not need to distinguish processing based on the data unit tag. As another example, a value of 0 in the field indicating whether to distinguish data unit tags may indicate that the first device and/or the second device distinguish processing based on the data unit tag; a value of 1 in the field indicating whether to distinguish data unit tags may indicate that the first device and/or the second device do not need to distinguish processing based on the data unit tag.

The second indication may be used to indicate whether to distinguish processing of the data unit of the first TID through multiple SN spaces according to the tag of the data unit. The description of the tag of the data unit is as described above.

In some implementations, in a case where processing of the data unit of the first TID is distinguished through multiple SN spaces according to the tag of the data unit, the first device and/or the second device may distinguish processing between a data unit carrying the first tag and a data unit not carrying the first tag in the first TID through multiple SN spaces. Alternatively, the first device and/or the second device may distinguish processing between a data unit carrying the first tag and a data unit carrying the second tag in the first TID through multiple SN spaces.

In some implementations, in a case where processing of the data unit of the first TID is distinguished according to the tag of the data unit, the first device and/or the second device may distinguish processing between data units tagged with different sub-TIDs in the first TID through multiple SN spaces. One SN space may correspond to one or more sub-TIDs. For example, multiple SN spaces may correspond one-to-one to multiple sub-TIDs.

The second indication may be indicated by a field indicating whether to distinguish SN spaces or sequences based on the data unit tag. The disclosure does not limit the indication method of the second indication. For example, a value of 1 in the field indicating whether to distinguish SN spaces or sequences based on the data unit tag may indicate that the data unit corresponding to the corresponding TID (e.g., an individually addressed QoS data unit) further distinguishes SN spaces or sequences according to the tag of the data unit; a value of 0 in the field indicating whether to distinguish SN spaces or sequences based on the data unit tag may indicate that the data unit corresponding to the corresponding TID (e.g., an individually addressed QoS data unit) does not further distinguish SN spaces or sequences according to the tag of the data unit. As another example, a value of 0 in the field indicating whether to distinguish SN spaces or sequences based on the data unit tag may indicate that the data unit corresponding to the corresponding TID (e.g., an individually addressed QoS data unit) further distinguishes SN spaces or sequences according to the tag of the data unit; a value of 1 in the field indicating whether to distinguish SN spaces or sequences based on the data unit tag may indicate that the data unit corresponding to the corresponding TID (e.g., an individually addressed QoS data unit) does not further distinguish SN spaces or sequences according to the tag of the data unit.

The third indication may be used to indicate whether, in a case where an SN of a received first data unit is greater than (or later than) an SN of an unreceived second data unit, the first data unit can be delivered to the next MAC procedure. In other words, the third indication may be used to indicate whether QoS data (i.e., individually addressed QoS data units) that adopts a specific SN sequence or SN space corresponding to the first TID is allowed to perform out-of-order delivery. That is, even if there is a data unit with a smaller sequence number (or earlier transmission order) that has not yet been received, in some cases (e.g., when the first condition is satisfied), the recipient of the data unit also delivers the received data unit with a larger sequence number (or later transmission order) to the next MAC procedure (or upper layer). It should be noted that when the number of SN sequences corresponding to the first TID is greater than 1, the specific SN sequence corresponding to the first TID may refer to one or each of the multiple SN sequences corresponding to the first TID.

The third indication may be indicated by a field indicating whether an SN sequence allows out-of-order delivery. The disclosure does not limit the indication method of the third indication. For example, a value of 1 in the field indicating whether an SN sequence allows out-of-order delivery may indicate that out-of-order delivery is allowed for QoS data (i.e., individually addressed QoS data units) of a specific SN sequence (or a specific counter) corresponding to the first TID; a value of 0 in the field indicating whether an SN sequence allows out-of-order delivery may indicate that out-of-order delivery is not allowed for QoS data (i.e., individually addressed QoS data units) of a specific SN sequence (or a specific counter) corresponding to the first TID. As another example, a value of 0 in the field indicating whether an SN sequence allows out-of-order delivery may indicate that out-of-order delivery is allowed for QoS data (i.e., individually addressed QoS data units) of a specific SN sequence (or a specific counter) corresponding to the first TID; a value of 1 in the field indicating whether an SN sequence allows out-of-order delivery may indicate that out-of-order delivery is not allowed for QoS data (i.e., individually addressed QoS data units) of a specific SN sequence (or a specific counter) corresponding to the first TID.

The condition parameter may be used to indicate a first condition. In a case where the first condition is satisfied, the first data unit can be delivered to the next MAC procedure. For example, even if there is a data unit with a smaller sequence number (or earlier transmission order) that has not yet been received, in a case where the first condition is satisfied, the recipient of the data unit also delivers the received first data unit with a larger sequence number (or later transmission order) to the next MAC procedure (or upper layer).

The condition parameter may be carried in a Condition Parameter field. The Condition Parameter field may include one or more subfields. The one or more subfields may correspond one-to-one to one or more parameters included in the condition parameter.

FIG. 7 is an example format diagram of an Out-of-Order Delivery Parameter Set field provided in an embodiment of the disclosure. As illustrated in FIG. 7, the Out-of-Order Delivery Parameter Set field may include one or more of the following fields: a Processing Mode field, an SN Space Quantity field, a field indicating whether to differentiate data unit tags, a field indicating whether to differentiate SN spaces or sequences based on a data unit tag, a field indicating whether an SN sequence allows out-of-order delivery, and a Condition Parameter field. The Processing Mode field may occupy 1 bit; the SN Space Quantity field may occupy 2 bits; the field indicating whether to differentiate data unit tags may occupy 1 bit; the field indicating whether to differentiate SN spaces or sequences based on a data unit tag may occupy 1 bit; the field indicating whether an SN sequence allows out-of-order delivery may occupy 1 bit; the number of bits occupied by the Condition Parameter field is variable. Descriptions of related fields are detailed above. The Out-of-Order Delivery Control field may also include other fields, which is not limited in the disclosure.

The condition parameter and the corresponding first condition are described in detail below.

The condition parameter may include one or more parameters. For example, the condition parameter may include one or more of the following: a first threshold, second information, a second threshold, third information, and a priority indication.

The first threshold may be used to indicate an SN deviation threshold. It can be understood that the first threshold may indicate a maximum allowed deviation between an SN of a received first data unit to be delivered and an SN of an unreceived second data unit with a smaller sequence number. Therefore, the first threshold may also be referred to as an SN deviation threshold.

In a case where the first condition is related to the first threshold, the first condition may include: a difference between the SN of the first data unit and the SN of the second data unit is less than or equal to the first threshold.

The first threshold may be carried in an SN Deviation Threshold field. The SN Deviation Threshold field may belong to the Condition Parameter field described above.

It should be noted that the second data unit may be any one of unreceived data units. Illustratively, the second data unit may be, among unreceived data units, a data unit with a smallest SN or a data unit with a largest SN. That is, the second data unit may be the earliest unreceived data unit or the latest unreceived data unit.

The second information may be used to indicate whether the first condition is related to the first threshold. Alternatively, the second information may be used to indicate whether the Condition Parameter field includes the SN Deviation Threshold field.

The second information may be carried in a field indicating whether the SN Deviation Threshold field is present. For example, a value of 0 in the field indicating whether the SN Deviation Threshold field is present may indicate that the Condition Parameter field does not include the SN Deviation Threshold field; a value of 1 in the field indicating whether the SN Deviation Threshold field is present may indicate that the Condition Parameter field includes the SN Deviation Threshold field. As another example, a value of 1 in the field indicating whether the SN Deviation Threshold field is present may indicate that the Condition Parameter field does not include the SN Deviation Threshold field; a value of 0 in the field indicating whether the SN Deviation Threshold field is present may indicate that the Condition Parameter field includes the SN Deviation Threshold field.

The second threshold may be used to indicate a buffer waiting threshold. The second threshold may be used to indicate a maximum waiting time in the buffer for a received data unit to be delivered.

In a case where the first condition is related to the second threshold, the first condition may include: a waiting time of the first data unit in a buffer is greater than or equal to the second threshold.

The second threshold may be carried in a Buffer Waiting Time Threshold field. The Buffer Waiting Time Threshold field may belong to the Condition Parameter field described above.

The third information may be used to indicate whether the first condition is related to the second threshold. Alternatively, the third information may be used to indicate whether the Condition Information field includes the Buffer Waiting Time Threshold field.

The third information may be carried in a field indicating whether the Buffer Waiting Time Threshold field is present. The disclosure does not limit the indication method of the third information. For example, a value of 0 in the field indicating whether the Buffer Waiting Time Threshold field is present may indicate that the Condition Parameter field does not include the Buffer Waiting Time Threshold field; a value of 1 in the field indicating whether the Buffer Waiting Time Threshold field is present may indicate that the Condition Parameter field includes the Buffer Waiting Time Threshold field. As another example, a value of 1 in the field indicating whether the Buffer Waiting Time Threshold field is present may indicate that the Condition Parameter field does not include the buffer Waiting Time Threshold field; a value of 0 in the field indicating whether the Buffer Waiting Time Threshold field is present may indicate that the Condition Parameter field includes the Buffer Waiting Time Threshold field.

The priority indication may be used to indicate whether to prioritize delivery of a data unit with a target tag.

In a case where the first condition is related to the priority indication, the first condition may include: the first data unit comprises a data unit with a target tag. That is, even if there is a data unit with a smaller SN (or earlier transmission order) that has not yet been received, in a case where the first condition is satisfied, the recipient of the data unit may deliver the received data unit with a larger SN (or later transmission order) that has the target tag to the next MAC procedure (or upper layer).

The priority indication may be carried in a field indicating whether to prioritize delivery of a data unit with a target tag. The disclosure does not limit the indication method of the priority indication. For example, a value of 1 in the field indicating whether to prioritize delivery of a data unit with a target tag may indicate that a data unit carrying the target tag is delivered with priority to the next MAC procedure (or upper layer); a value of 0 in the field indicating whether to prioritize delivery of a data unit with a target tag may indicate that a data unit carrying the target tag is not delivered with priority to the next MAC procedure (or upper layer).

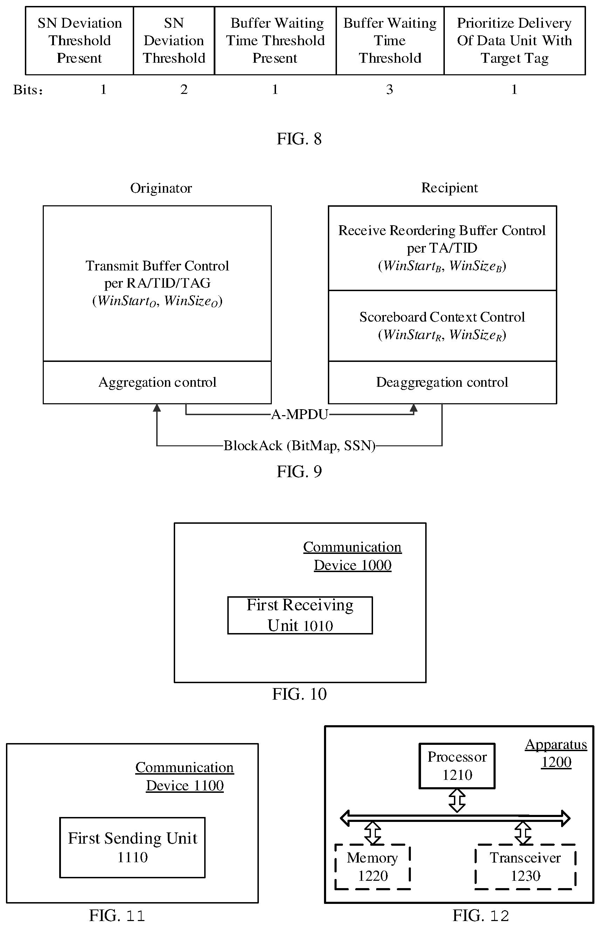

FIG. 8 is an example format diagram of a condition parameter field provided in an embodiment of the disclosure. As illustrated in FIG. 8, the Condition Parameter field may include one or more of the following fields: a field indicating whether an SN deviation threshold is present, an SN Deviation Threshold field, a field indicating whether a buffer waiting time threshold is present, a Buffer Waiting Time Threshold field, and a field indicating whether to prioritize delivery of a data unit with a target tag. The field indicating whether an SN deviation threshold is present may occupy 1 bit; the SN Deviation Threshold field may occupy 2 or 3 bits; the field indicating whether a buffer waiting time threshold is present may occupy 1 bit; the buffer waiting time threshold field may occupy 2 or 3 bits; the field indicating whether to prioritize delivery of a data unit with a target tag may occupy 1 bit. The condition parameter field may also include other fields (e.g., a reserved field), which is not limited in the disclosure.

The first condition is described in detail below using Case 1 and Case 2, taking the Condition Parameter field illustrated in FIG. 8 as an example.

Case 1 includes: a case where the field indicating whether to prioritize delivery of a data unit with a target tag indicates that a data unit carrying the target tag is not prioritized for delivery to the next MAC procedure (or upper layer).

For Case 1, when the Condition Parameter field includes the SN Deviation Threshold field and the Buffer Waiting Time Threshold field, the first condition indicated by the Condition Parameter field may include: for a received first data unit, even if there is an unreceived data unit with a sequence number lower than the sequence number of the first data unit (i.e., there is a second data unit with an earlier transmission order that has not been received), when a difference between the sequence number of the received first data unit to be delivered and the sequence number of the unreceived second data unit (e.g., the earliest unreceived data unit) is less than or equal to a value indicated by the SN Deviation Threshold field, and a buffer waiting time for the received data unit to be delivered exceeds a time length indicated by the Buffer Waiting Time Threshold field, the first data unit is still delivered to the next MAC procedure (or upper layer).

For Case 1, when the Condition Parameter field includes only the SN Deviation Threshold field, the first condition indicated by the Condition Parameter field may include: for a received first data unit, even if there is an unreceived data unit with a sequence number lower than the sequence number of the first data unit (i.e., there is an unreceived data unit with an earlier transmission order), when a difference between the sequence number of the received data unit to be delivered and the sequence number of the unreceived data unit (e.g., the earliest unreceived data unit) is less than or equal to a value indicated by the SN Deviation Threshold field, the first data unit is still delivered to the next MAC procedure (or upper layer).

For Case 1, when the Condition Parameter field includes only the Buffer Waiting Time Threshold field, the first condition indicated by the Condition Parameter field may include: for a received first data unit, even if there is an unreceived second data unit with a sequence number lower than the sequence number of the first data unit (i.e., there is an unreceived data unit with an earlier transmission order), when a buffer waiting time for the received first data unit to be delivered exceeds a time length indicated by the Buffer Waiting Time Threshold field, the first data unit is still delivered to the next MAC procedure (or upper layer).

Case 2 includes: a case where the field indicating whether to prioritize delivery of a data unit with a target tag indicates that a data unit carrying the target tag is prioritized for delivery to the next MAC procedure (or upper layer).

For Case 2, when the Condition Parameter field does not include the SN Deviation Threshold field or the Buffer Waiting Time Threshold field, the first condition indicated by the Condition Parameter field may include: for a first data unit that adopts a specific SN sequence corresponding to a TID, if the first data unit carries a target tag (e.g., a "low-latency or urgent transmission" tag), even if there is an unreceived second data unit with a smaller SN (or earlier transmission order) and it is confirmed that the unreceived second data unit with the smaller SN (or earlier transmission order) is a data unit not carrying the "low-latency or urgent transmission" tag, the recipient may deliver the received first data unit with a larger SN (or later transmission order) carrying the "low-latency or urgent transmission" tag to the next MAC procedure (or upper layer).

For Case 2, when the Condition Parameter field includes the SN Deviation Threshold field but does not include the buffer waiting time threshold field, the first condition indicated by the Condition Parameter field may include: for a first data unit that adopts a specific SN sequence corresponding to a TID, if the first data unit carries a target tag (e.g., a "low-latency or urgent transmission" tag), even if there is an unreceived second data unit with a smaller SN (or earlier transmission order) and it is confirmed that the unreceived second data unit with the smaller SN (or earlier transmission order) is a data unit carrying the "low-latency or urgent transmission" tag, when a difference between the SN of the received first data unit carrying the "low-latency or urgent transmission" tag to be delivered and the SN of the unreceived second data unit carrying the "low-latency or urgent transmission" tag (e.g., the earliest unreceived data unit carrying the "low-latency or urgent transmission" tag) is less than or equal to a value indicated by the SN Deviation Threshold field, the first data unit is still delivered to the next MAC procedure (or delivered to the upper layer).

In some embodiments, in a case where a data unit of the same TID can adopt multiple SN spaces, the multiple SN spaces may include a second SN space and a third SN space, the second SN space may be used for a data unit with a target tag, and the third SN space may be used for a data unit without a target tag.

As described above, the target tag may include, for example, a low-latency tag and/or an urgent delivery tag. Therefore, through the target tag, a low-latency data unit and a non-low-latency data unit can be distinguished, and different SN spaces can be used, i.e., a low-latency data unit can use a separate SN space, so as to process the low-latency data unit earlier, thereby meeting the low-latency requirement.

As a possible implementation, an originator may further distinguish, for data units (e.g., individually addressed QoS data units) of the same RA and TID, according to the tag of the data unit, and assign different SN spaces (or SN sequences) and corresponding buffers for the target tag and the non-target tag. A recipient may further distinguish, for data units of the same TA and TID, according to the tag of the data unit, and assign different buffers for the target tag and the non-target tag. The originator and the recipient may establish block acknowledgement agreement parameters and operation parameters per (or based on) RA, TID, and tag of the data unit. That is, the first device and/or the second device may adopt different SN spaces or sequences for a data unit carrying the target tag and a data unit not carrying the target tag, respectively, thereby establishing different block acknowledgement agreement parameters and operation parameters. An example is described below with reference to FIG. 9.

As illustrated in FIG. 9, an originator may include a transmit buffer control per (or based on) receiver address (RA), traffic identifier (TID), and tag of a data unit. The transmit buffer may use WinStartO and WinSizeO to submit MPDUs for transmission, and may release the transmit buffer upon receiving a BA frame from a recipient. WinStartO is a starting sequence number of a transmit window, and WinSizeO is the number of buffers negotiated in the block acknowledgement agreement. A recipient may include a receive reordering buffer (cache) control per (or based on) TA, TID, and tag of a data unit. The receive reordering buffer may use WinStart_{B} and WinSize_{B} to reorder data units. WinStart_{B} indicates a value of a Sequence Number field of a first data unit that has not been received (e.g., the data units are MSDUs or A-MSDUs, arranged in ascending order of sequence numbers); WinSize_{B} indicates a size of a receive window; WinEnd_{B} indicates a highest sequence number of a data unit expected to be received in a current receive window. Two indication modes of the tag of a data unit are described below by way of example.

In a first indication mode, a target tag of a data unit may be indicated as "low-latency or urgent transmission". In this case, at the originator, for the same RA and TID, a data unit carrying the "low-latency or urgent transmission" tag and a data unit not carrying the "low-latency or urgent transmission" tag or carrying a "non-low-latency or non-urgent transmission" tag may adopt different SN spaces or sequences, respectively, thereby corresponding to different transmit buffer controls. At the recipient, for the same TA and TID, a data unit carrying the "low-latency or urgent transmission" tag and a data unit not carrying the "low-latency or urgent transmission" tag or carrying a "non-low-latency or non-urgent transmission" tag may adopt different SN spaces or sequences, respectively, thereby corresponding to different receive reordering buffer controls.

In a second indication mode, a target tag of a data unit may be indicated by a sub-traffic identifier (sub-TID). The sub-TID may take integers such as 0, 1, etc. Data units carrying different sub-TID tags may adopt different SN sequences (or SN spaces). At the originator, for the same RA and TID, data units may adopt different SN spaces or sequences based on the sub-TID tag, thereby corresponding to different transmit buffer controls. At the recipient, for the same TA and TID, data units may adopt different SN spaces or sequences based on the sub-TID tag, thereby corresponding to different receive reordering buffer controls.

The aggregation control illustrated in FIG. 9 may create an A-MPDU. The aggregation control may adjust an acknowledgement policy of a transmitted QoS data frame according to rules defined in the originator behavior to request a BA frame response.

The recipient includes a receive reordering buffer control per (or based on) TA, flow TID, and tag of a data unit, which includes associated control states. The receive reordering buffer is responsible for reordering data units (e.g., MSDUs or A-MSDUs) such that: 1) for a case where out-of-order delivery is not allowed for a current SN sequence, data units are finally delivered to the next MAC procedure in the order of receive sequence numbers; or, 2) for a case where out-of-order delivery is allowed for a current SN sequence, in a case where a first condition is satisfied, even if there is a data unit with a smaller SN (or earlier transmission order) that has not been received, the recipient delivers the received data unit with a larger SN (or later transmission order) to the next MAC procedure (or upper layer). The receive reordering buffer may also be responsible for identifying and discarding duplicate frames (i.e., frames having the same SN) corresponding to the block acknowledgement agreement. The receive reordering buffer may maintain its own state independent of a scoreboard context control to perform receive reordering buffer control operations.

For each block acknowledgement agreement, the recipient may select a full-state operation or a partial-state operation. The scoreboard context control stores an acknowledgement bitmap containing a current reception state of a data unit (e.g., an MSDU or A-MSDU) corresponding to the block acknowledgement agreement. In the full-state operation, the state is stored in statically allocated memory. In the partial-state operation, the state is stored in cache memory. Therefore, in the partial-state operation, state information depends on cache flushing. This entity provides the values of the bitmap and the Starting Sequence Number subfield for inclusion in a BA frame sent to the originator to response to the originator.

A deaggregation control entity separates frames contained in an A-MPDU.

Each received data unit (e.g., an MPDU) may be analyzed by the scoreboard context control and the received reordering buffer control.

Optionally, each block acknowledgement agreement may be uniquely identified by a tuple consisting of address 1, address 2, a TID, and/or a target tag from an ADDBA response frame that successfully establishes the block acknowledgement agreement. A case where the tuple uniquely identifying includes the target tag refers to a case where a data unit carrying the target tag and a data unit not carrying the target tag correspond to different SN spaces or sequences. The STA corresponding to address 1 of the ADDBA response frame is the originator; the STA corresponding to address 2 of the ADDBA response frame is the recipient. A data frame containing the same address 1, address 2, and TID values as the ADDBA response frame that successfully establishes the block acknowledgement agreement is associated with the block acknowledgement agreement, provided that the block acknowledgement agreement is still valid, and the agreement is established by receiving the ADDBA response frame.

Through the first frame and/or the second frame, a block acknowledgement agreement may be established between the first device and the second device. The process of establishing a block acknowledgement agreement is described below by way of example. In the following embodiment, the first device may be an originator, and the second device may be a recipient. The first frame may be an ADDBA response frame. The second frame may be an ADDBA request frame.

To establish a block acknowledgement agreement, the originator may send an ADDBA request frame indicating a TID for which the block acknowledgement agreement is being established. The Buffer Size field and the Block Ack Timeout field in the ADDBA request frame is advisory.

The recipient may respond with an ADDBA response frame. The recipient may choose to accept or reject the request. When the recipient accepts, a block acknowledgement agreement is established between the originator and the recipient.

When the recipient accepts the request, the recipient indicates the type of the block acknowledgement agreement, the type of the block acknowledgement frame, and the number of buffers to be allocated and the block acknowledgement timeout to be used to support the block acknowledgement agreement within the ADDBA response frame. In particular, if the block acknowledgement agreement supports distinguishing SN spaces or SN sequences based on a tag, the recipient may allocate different buffers for each SN space or sequence. If the recipient rejects the request, the originator does not use the block acknowledgement mechanism.

For each accepted block acknowledgement agreement, the originator sets the sequence numbers of frames sent according to the agreement to the value of the "block Ack starting sequence control" field of the ADDBA request frame of the accepted block acknowledgement agreement. In particular, if the block acknowledgement agreement supports distinguishing SN spaces or SN sequences based on a target tag, the originator sets the sequence numbers of frames sent according to the agreement for a particular SN space or SN sequence to the value of the "block Ack starting sequence control" field for the corresponding SN space or SN sequence in the ADDBA request frame of the accepted block acknowledgement agreement.

When the block acknowledgement agreement is successfully established, the originator may change the size of its transmit window, where the transmit window is not larger than the buffer size field of the ADDBA response frame.

In particular, if the block acknowledgement agreement supports distinguishing SN spaces or SN sequences based on a tag, the originator may change the size of the transmit window corresponding to a certain SN space or sequence (e.g., the second SN space or the third SN space). For example, the transmit window corresponding to that SN space or sequence is not larger than the buffer size field corresponding to that SN space or sequence in the ADDBA response frame.

In some embodiments, if the value of the buffer size field in the ADDBA response frame is smaller than the value of the buffer size field in the ADDBA request frame, the originator needs to change the size of its transmit window (i.e., WinSizeO) to satisfy the following condition: WinSizeO being less than or equal to the value of the buffer size field of the ADDBA response frame.

In some embodiments, if the block acknowledgement agreement supports distinguishing SN spaces or SN sequences based on a tag, if the value of the buffer size field corresponding to a certain SN space or sequence in the ADDBA response frame is smaller than the value of the buffer size field in the ADDBA request frame, the originator needs to change the size of its transmit window (WinSizeO) to satisfy the following condition: WinSizeO being less than or equal to the value of the buffer size field corresponding to that SN space or sequence in the ADDBA response frame.

In some embodiments, if the recipient supports out-of-order delivery, the originator may include an out-of-order delivery configuration element in the ADDBA request frame. If the Out-Of-Order-Delivery Enabled subfield indicates that out-of-order delivery is enabled for the data unit corresponding to the corresponding TID, and the Processing Mode subfield indicates that the data unit corresponding to the corresponding TID (i.e., an individually addressed QoS data unit) adopts only one SN space (or SN sequence). At the same time, the condition parameter field may carry one or more of an SN Deviation Threshold field, a Buffer Waiting Time Threshold field, and a field indicating whether to prioritize delivery of a data unit with a target tag. If the recipient accepts the out-of-order delivery configuration of the ADDBA request frame, the recipient sends an ADDBA response frame. The ADDBA response frame may include the out-of-order delivery configuration element. The whether-to-enable-out-of-order-delivery field included in the ADDBA response frame may indicate that out-of-order delivery is enabled for the data unit corresponding to the corresponding TID. The processing mode field in the ADDBA response frame may indicate that the QoS data corresponding to the corresponding TID (i.e., an individually addressed QoS data unit) adopts only one SN space (or SN sequence). The condition parameter field in the ADDBA response frame may carry one or more of an SN Deviation Threshold subfield, a Buffer Waiting Time Threshold field, and a field indicating whether to prioritize delivery of a data unit with a target tag. The Condition Parameter field carried in the ADDBA response frame may be the same as or different from the Condition Parameter field carried in the ADDBA request frame. In particular, the condition parameter for delivery to the next MAC procedure (or upper layer) adopted by the successfully established block acknowledgement agreement shall be determined by the condition parameter carried in the ADDBA response frame that successfully establishes the block acknowledgement agreement. If the recipient rejects the out-of-order delivery configuration, the recipient may set the whether-to-enable-out-of-order-delivery field in the out-of-order delivery configuration element in the ADDBA response to indicate that out-of-order delivery is not enabled for the data unit corresponding to the corresponding TID, or may not include the out-of-order delivery configuration element in the ADDBA response frame.

In some embodiments, if the recipient supports out-of-order delivery, the originator may include an out-of-order delivery configuration element in the ADDBA request frame. If the Out-Of-Order-Delivery Enabled field indicates that out-of-order delivery is enabled for the data unit corresponding to the corresponding TID, and the Processing Mode subfield indicates that the data unit corresponding to the corresponding TID (i.e., an individually addressed QoS data unit) may adopt one or more SN spaces (or SN sequences), the SN Space or SN Sequence Quantity field indicates that the quantity of SN spaces or SN sequences adopted by the QoS data corresponding to the corresponding TID (i.e., an individually addressed QoS data unit) is greater than 1. At the same time, the ADDBA request frame may indicate, via the field indicating whether to distinguish SN spaces or sequences based on a data unit tag, that SN spaces or sequences are further distinguished according to the data unit tag, and may carry condition parameters for the SN sequence. If the field indicating whether an SN sequence allows out-of-order delivery indicates that out-of-order delivery is allowed for the data unit corresponding to the corresponding TID (i.e., an individually addressed QoS data unit) that adopts a specific SN sequence, the condition parameter field is carried. The parameters carried in the condition parameter field may be suggestive. If the recipient accepts the out-of-order delivery configuration of the ADDBA request frame, the recipient may send an ADDBA response frame. The ADDBA response frame may include the out-of-order delivery configuration element. In this element, the whether-to-enable-out-of-order-delivery field may indicate that out-of-order delivery is enabled for the data unit corresponding to the corresponding TID, the processing mode field may indicate that the data unit corresponding to the corresponding TID (i.e., an individually addressed QoS data unit) may adopt one or more SN spaces (or SN sequences), the SN space or sequence quantity field indicates the same quantity as carried in the ADDBA request frame, and the field indicating whether to distinguish SN spaces or sequences based on a data unit tag indicates that SN spaces or sequences are further distinguished according to the data unit tag, and the condition parameter field is carried. The condition parameter field may be the same as or different from the condition parameter field carried in the ADDBA request frame. In particular, the condition parameter adopted by the successfully established block acknowledgement agreement may be determined by the condition parameter field carried in the ADDBA response frame that successfully establishes the block acknowledgement agreement. If the recipient rejects the out-of-order delivery configuration, the recipient may set the whether-to-enable-out-of-order-delivery subfield in the out-of-order delivery configuration element in the ADDBA response frame to indicate that out-of-order delivery is not enabled for the data unit corresponding to the corresponding TID, or may not include the out-of-order delivery configuration element in the ADDBA response frame.

In some embodiments, a third data unit interacted between the first device and the second device belongs to a first SN space, a receive window of the first SN space is a first window, and the first window may correspond to a first delivery record, the first delivery record being used to record whether a data unit in the first window has been delivered to the next MAC procedure. It can be understood that the first delivery record may be used to implement an out-of-order delivery block acknowledgement mechanism based on the first SN space.

The out-of-order delivery block acknowledgement mechanism based on the first SN space may be referred to as an out-of-order delivery block acknowledgement mechanism based on a single SN space. The first SN space may be an SN space in Scenario 1 or Scenario 2 below. Scenario 1 is a scenario where different SN spaces or sequences correspond to different RAs, TIDs, and data unit tags. The first SN space may be the second SN space or the third SN space described above. That is, the out-of-order delivery block acknowledgement mechanism based on a single SN space defines a block acknowledgement mechanism that allows out-of-order delivery for a specific SN sequence (e.g., an SN sequence corresponding to a data unit carrying a target tag). Scenario 2 is a scenario where the same receiver address (RA) and traffic identifier (TID) correspond to the same SN space or sequence. That is, the out-of-order delivery block acknowledgement mechanism based on a single SN space defines a block acknowledgement mechanism corresponding to the same SN space or sequence.

The disclosure does not limit the recording method of the first delivery record. For example, the first delivery record may be represented by a first bitmap, and a target bit of the first bitmap may be used to indicate whether the third data unit has been delivered to the next MAC procedure. The first bitmap may be indexed by sequence numbers of data units.

For a block acknowledgement agreement that allows out-of-order delivery, one or more receive reordering buffers may be maintained for each block acknowledgement agreement. A receive reordering buffer may be used to buffer data units that have been received but have not yet been delivered to the next MAC procedure. One or more receive reordering buffers may correspond to one SN space or sequence. The one or more receive reordering buffers may include a first buffer. The first buffer may maintain a first delivery record. The range of sequence numbers indicated in the first delivery record may correspond to the range of sequence numbers indicated corresponding to the first buffer. Each of the one or more receive reordering buffers may maintain a corresponding delivery record.

The first buffer may also maintain one or more of the following: a first parameter (which may be represented by a WinStart_{B} parameter), a second parameter (which may be represented by a WinEnd_{B} parameter), and a third parameter (which may be represented by a WinSize_{B} parameter). The WinStart_{B} parameter may represent a value of a sequence number subfield of a first data unit (arranged in ascending order of sequence numbers) that has not yet been received. The WinEnd_{B} parameter may represent a highest sequence number expected to be received in a current receive window. The WinSize_{B} parameter may represent a size of the receive window.

How to set the first delivery record is described by taking the first delivery record represented by a first bitmap as an example. Illustratively, a 12-bit unsigned integer start sequence number WinStart_{B} may indicate a lowest sequence number position in the first bitmap. A 12-bit unsigned integer end sequence number WinEnd_{B} may indicate a highest sequence number position in the first bitmap. The size of the first bitmap may be set to WinSize_{B}.

Optionally, the WinStart_{B} parameter may be initialized to a starting sequence number subfield value corresponding to the SN sequence in the ADDBA request frame. The WinEnd_{B} parameter may be initialized to WinStart_{B} + WinSize_{B} - 1. WinSize_{B} is set to the smaller of a bitmap length field and a value of a buffer size field corresponding to the SN sequence in the ADDBA response frame that establishes the block acknowledgement agreement.

Illustratively, a bit value of 0 at a sequence number position in the first bitmap may indicate that the data unit with the corresponding sequence number has not been delivered to the next MAC procedure; a bit value of 1 at the sequence number position in the first bitmap may indicate that the data unit with the corresponding sequence number has been delivered to the next MAC procedure. Alternatively, a bit value of 1 at the sequence number position in the first bitmap may indicate that the data unit with the corresponding sequence number has not been delivered to the next MAC procedure; a bit value of 0 at the sequence number position in the first bitmap may indicate that the data unit with the corresponding sequence number has been delivered to the next MAC procedure.

The initialization of the first bitmap may include: a bit corresponding to a lowest SN in the first bitmap is initialized to a first parameter, the first parameter being initialized to a value of a starting sequence number field corresponding to the first SN space; a bit corresponding to a highest SN in the first bitmap is initialized to a second parameter, the second parameter being initialized to a value = the first parameter + a value of a third parameter - 1, and the third parameter being the smaller of a length of the first bitmap and a value of a buffer size field corresponding to the first SN space. The first parameter may be WinStart_{B}, the second parameter may be WinEnd_{B}, and the third parameter may be WinSize_{B}.

Based on this, when initializing the first bitmap, one or more of the following may be set: the lowest sequence number position in the first bitmap is WinStart_{B}; the highest sequence number position in the first bitmap is WinEnd_{B}; bit values within the range from WinStart_{B} to WinEnd_{B} in the first bitmap are all set to 0.

In some embodiments, in a case where the third data unit is received, if the first delivery record indicates that the third data unit has been delivered to the next MAC procedure, the third data unit may be discarded. The first delivery record indicating that the third data unit has been delivered to the next MAC procedure may include: a bit corresponding to the third data unit in the first bitmap is 1.

In some embodiments, if the first delivery record indicates that the third data unit has not been delivered to the next MAC procedure, the third data unit in the first buffer may be delivered to the next MAC procedure. For example, the first SN space may correspond to the first buffer, and if the first delivery record indicates that the third data unit has not been delivered to the next MAC procedure and the third data unit satisfies the first condition, the third data unit in the first buffer is delivered to the next MAC procedure.

In some embodiments, in response to a third data unit being delivered to a next MAC procedure, the first delivery record may be updated to indicate that the third data unit has been delivered to the next MAC procedure. Updating the first delivery record to indicate that the third data unit has been delivered to the next MAC procedure may include: setting a bit corresponding to the third data unit in a first bitmap to 1.

The following describes, with respect to the first buffer, the operation on the received third data unit.

The data frame corresponding to the third data unit may be associated with a specific block Ack agreement. The modification of the first delivery record corresponding to the first SN space (or sequence) may satisfy the following embodiments. In the following embodiments, SN is the value of the sequence number subfield of the received third data unit.

In some embodiments, if *WinStart_{B} ≤ SN ≤ WinEnd_{B}*, the recipient may perform operations of Step 1.1 to Step 1.6.

Step 1.1: If no data unit with the same SN exists in the first buffer and the bit value corresponding to the SN of the third data unit in the first bitmap is set to 0, store the received third data unit in the buffer; if a data unit with the same SN exists in the first buffer or the bit value corresponding to the SN of the third data unit in the first bitmap is set to 1, discard the third data unit.

Step 1.2: If the third data unit is stored in the buffer in a consecutively increasing sequence number subfield value order starting from SN = WinStart_{B} or SN > WinStart_{B}, and a condition for in-order delivery (i.e., in-order delivery to the next MAC procedure) is satisfied, then deliver the third data unit to the next MAC procedure, and update the first bitmap, i.e., set the bit value corresponding to the sequence number of the third data unit in the first bitmap to 1 (indicating that the data unit corresponding to the bit position has been delivered to the next MAC procedure). It should be noted that the condition for in-order delivery may refer to the rules defined in the receive reordering buffer control operations as specified in the IEEE 802.11 specification.

For other data units, Step 1 and Step 2 continue sequentially until there is no cached data unit whose sequence number is the next sequence value following the current sequence number subfield and the bit value corresponding to the sequence number of that data unit in the first bitmap is 0 (i.e., indicating that the data unit has not been delivered to the next MAC procedure). The current sequence number subfield refers to the sequence number subfield of the data unit currently being delivered to the next MAC procedure. Optionally, record the packet number subfield (if any) of the last data unit delivered to the next MAC procedure, setting its value as PN-S.

Step 1.3: Set WinStart_{B} to the value of the sequence number subfield of the last data unit currently delivered to the next MAC procedure, plus 1.

Step 1.4: Set WinEnd_{B} = WinStart_{B} + WinSize_{B} - 1.

Step 1.5: Perform the following Update Step 1 and/or Update Step 2 on the sequence number range indicated by the first bitmap and the corresponding delivery records (i.e., the corresponding bit values).

Update Step 1: The start sequence number (or lowest sequence number) indicated by the updated first bitmap may be set to WinStart_{B}; the end sequence number (or highest sequence number) indicated by the updated first bitmap may be set to WinEnd_{B}.

Update Step 2: For a certain sequence number indicated in the updated first bitmap, if the delivery record corresponding to that sequence number (e.g., a bit value of 1) exists in the first bitmap before update, then the bit value corresponding to that indicated sequence number is set to the bit value corresponding to that sequence number in the first bitmap before update; if the delivery record corresponding to that sequence number does not exist in the first bitmap before update, then the bit value corresponding to that indicated sequence number may be set to 0.

Step 1.6: Check for the presence of holes (i.e., for a cached data unit corresponding to a certain sequence number, there exists a data unit with a smaller sequence number that has not yet been received) among the data units stored in the first buffer.

If a hole exists, set the sequence number of the most recent MSDU or A-MSDU corresponding to a sequence number that is not currently cached (i.e., not yet received) as SN-Hole, and perform processing related to out-of-order delivery based on a first condition. The following description is provided according to different first conditions.

If the first condition is determined based on an SN deviation threshold negotiated via the block Ack agreement, then for the data units stored in the first buffer, they may be sorted in increasing order of their sequence number field values from lowest to highest. If the difference between the sequence number of a cached third data unit and SN-Hole is less than or equal to the value indicated by the SN Deviation Threshold field of the negotiated block Ack agreement, the third data unit is still delivered to the next MAC procedure (or delivered to an upper layer). At the same time, the bit value corresponding to the sequence number position of the third data unit in the first bitmap is set to 1, indicating that the third data unit corresponding to that sequence number position has been delivered to the next MAC procedure (or delivered to the upper layer). This process may continue sequentially according to the order of data units in the first buffer until no data unit in the buffer satisfies the first condition for delivery to the next MAC procedure.

If the first condition is determined based on a priority delivery target flag negotiated via the block Ack agreement, then for the data units stored in the first buffer, they may be sorted in increasing order of their sequence number subfield values from lowest to highest. When a data unit carrying the target flag exists, and the packet number field value corresponding to that data unit is consecutive with PN-S (e.g., its packet number field value is PN-S plus 1), then deliver that data unit to the next MAC procedure (or to an upper layer). At the same time, set PN-S to the packet number subfield of the data unit most recently delivered to the next MAC procedure; and, the bit value corresponding to the sequence number position of that data unit in the first bitmap may be set to 1, to indicate that the data unit corresponding to that sequence number position has been delivered to the next MAC procedure. This process may continue sequentially according to the order of data units until no data unit in the buffer satisfies the condition for delivery to the next MAC procedure.

In some embodiments, if *WinEnd_{B}* < *SN* < *WinStart_{B}* + 2¹¹, the recipient can perform operations at Step 2.1 to Step 2.8.

Step 2.1: If no data unit with the same sequence number exists in the first buffer, store the received MPDU in the first buffer. If a data unit with the same sequence number exists in the first buffer, discard that data unit.

Step 2.2: Set WinEnd_{B} = SN.

Step 2.3: Set WinStart_{B} = WinEnd_{B} - WinSize_{B} + 1.

Step 2.4: Deliver, to the next MAC procedure, any complete data unit stored in the first buffer whose sequence number subfield value is lower than the new value of WinStart_{B}, in increasing order of the sequence number subfield values. Gaps may exist in the sequence number subfield values of the data units delivered to the next MAC procedure.

Step 2.5: Deliver, to the next MAC procedure, the data units stored in the first buffer in increasing order of sequence number subfield values starting from WinStart_{B}, and proceed sequentially until there is no cached data unit whose sequence number is the next sequence number value following the current sequence number subfield and the bit corresponding to the sequence number of that MSDU or A-MSDU in the first bitmap is 0 (i.e., indicating that the data unit has not been delivered to the next MAC procedure). The current sequence number subfield refers to the sequence number subfield of the data unit currently being delivered to the next MAC procedure. Optionally, record the packet number subfield (if any) of the last data unit delivered to the next MAC procedure, setting its value as PN-S.

Step 2.6: Set WinStart_{B} to the value of the sequence number subfield of the last data unit currently delivered to the next MAC procedure, plus 1.

Step 2.7: Set WinEnd_{B} = WinStart_{B} + WinSize_{B} - 1.

Step 2.8: Perform according to Step 1.5 and Step 1.6 described above.

In some embodiments, if *WinStart_{B}* + 2¹¹ ≤ *SN* ≤ *WinStart_{b}*, the data unit is discarded, i.e., the data unit is neither stored in the buffer nor delivered to the next MAC procedure.

FIG. 10 is a schematic structural diagram of a communication device 1000 according to an embodiment of the disclosure. The communication device 1000 is a first device. The communication device 1000 includes: a first receiving unit 1010.

The first receiving unit 1010 is configured to receive a first frame sent by a second device. The first frame is used to indicate information related to out-of-order delivery in a block acknowledgment mechanism.

In the embodiment of the disclosure, the above-mentioned communication device 1000 may be configured to perform some or all of the method steps performed by the first device in the above-mentioned method embodiments. The communication apparatus 1000 includes units or modules for performing the method steps corresponding to the foregoing FIG. 4 to FIG. 9. The method procedures have been described in detail in the foregoing embodiments. The modules in this embodiment have the same functions or perform the same steps, and details will not be described again here. However, those skilled in the art should understand that the textual descriptions corresponding to the foregoing FIG. 4 to FIG. 9 may be incorporated into this embodiment, corresponding to the modules in the communication device 1000.

In an optional embodiment, the first receiving unit 1010 may be a transceiver 1230. The communication device 1000 may further include a processor 1210 and a memory 1220, as specifically illustrated in FIG. 12.

FIG. 11 is a schematic structural diagram of a communication device 1100 according to an embodiment of the disclosure. The communication device 1100 is a second device. The communication device 1100 includes a first sending unit 1110.

The first sending unit 1110 is configured to send a first frame to a first device. The first frame is used to indicate information related to out-of-order delivery in a block acknowledgment mechanism.

In the embodiment of the disclosure, the above-mentioned communication device 1100 may be configured to perform some or all of the method steps performed by the first device in the above-mentioned method embodiments. The communication apparatus 1100 includes units or modules for performing the method steps corresponding to the foregoing FIG. 4 to FIG. 9. The method procedures have been described in detail in the foregoing embodiments. The modules in this embodiment have the same functions or perform the same steps, and details will not be described again here. However, those skilled in the art should understand that the textual descriptions corresponding to the foregoing FIG. 4 to FIG. 9 may be incorporated into this embodiment, corresponding to the modules in the communication device 1100.

In an optional embodiment, the first sending unit 1110 may be a transceiver 1230. The communication device 1100 may further include a processor 1210 and a memory 1220, as specifically illustrated in FIG. 12.

FIG. 12 is a schematic structural diagram of an apparatus for communication according to an embodiment of the disclosure. The dashed lines in FIG. 12 indicate that the unit or module is optional. The apparatus 1200 may be configured to implement the methods described in the above method embodiments. The apparatus 1200 may be a chip or a communication device.

The apparatus 1200 may include one or more processors 1210. The processor 1210 may support the apparatus 1200 in implementing the methods described in the preceding method embodiments. The processor 1210 may be a general-purpose processor or a dedicated processor. For example, the processor may be a central processing unit (CPU). Alternatively, the processor may be other general-purpose processors, digital signal processors (DSPs), application specific integrated circuits (ASICs), field programmable gate arrays (FPGAs) or other programmable logic devices, discrete gate or transistor logic devices, or discrete hardware components. A general-purpose processor may be a microprocessor or the processor may be any conventional processor or the like.

The apparatus 1200 may also include one or more memories 1220. The memory 1220 stores a program that can be executed by the processor 1210, causing the processor 1210 to perform the methods described in the preceding method embodiments. The memory 1220 may be independent of the processor 1210 or may be integrated into the processor 1210.

The apparatus 1200 may also include a transceiver 1230. The processor 1210 may communicate with other devices or chips via the transceiver 1230. For example, the processor 1210 may transmit and receive data with other devices or chips via the transceiver 1230.

An embodiment of the disclosure also provides a computer-readable storage medium for storing a program. The computer-readable storage medium may be applied to the communication device provided in the embodiments of the disclosure, and the program causes a computer to perform the methods executed by the communication device in the various embodiments of the disclosure.

An embodiment of the disclosure also provides a computer program product. The computer program product includes a program. The computer program product may be applied to the communication device provided in the embodiments of the disclosure, and the program causes a computer to perform the methods executed by the communication device in the various embodiments of the disclosure.

An embodiment of the disclosure also provides a computer program. The computer program may be applied to the communication device provided in the embodiments of the disclosure, and the computer program causes a computer to perform the methods executed by the communication device in the various embodiments of the disclosure.

It should be understood that the terms "system" and "network" in this application may be used interchangeably. In addition, the terminology used in this application is for the purpose of explaining specific embodiments of the application only and is not intended to limit the application. The terms "first", "second", "third", "fourth", etc. in the specification, claims, and drawings of this application are used to distinguish between different objects rather than to describe a specific order. Furthermore, the terms "comprising" and "having" and any variations thereof are intended to cover non-exclusive inclusion.

In the embodiments of the disclosure, a "field" may also be referred to as a "field", a "subfield", or a "sub-field". One field may occupy one or more bytes (byte/octet), or one field may occupy one or more bits.

In the embodiments of the disclosure, the mentioned "indication" may be a direct indication, an indirect indication, or may indicate an association relationship. For example, A indicates B, which may mean that A directly indicates B, e.g., B can be obtained through A; it may also mean that A indirectly indicates B, e.g., A indicates C, and B can be obtained through C; it may also mean that there is an association relationship between A and B.

In the embodiments of the disclosure, "B corresponding to A" means that B is associated with A, and B can be determined according to A. However, it should also be understood that determining B according to A does not mean determining B solely according to A, but B may be determined according to A and/or other information.

In the embodiments of the disclosure, the term "corresponding" may indicate a direct or indirect correspondence between two elements, may also indicate an association relationship between them, or may indicate relationships such as indicating and being indicated, configuring and being configured.

In the embodiments of the disclosure, "predefined" or "preconfigured" may be implemented by pre-storing corresponding codes, tables, or other methods that can be used to indicate relevant information in a device (e.g., including an AP and a STA). The specific implementation method is not limited in this application. For example, predefined may mean defined in a protocol.

In the embodiments of the disclosure, the term "and/or" merely describes an association relationship between associated objects and indicates that three relationships may exist. For example, A and/or B may indicate three cases: A alone, both A and B, and B alone. In addition, the character "/" in this text generally indicates that the associated objects are in an "or" relationship.

In the embodiments of the disclosure, "comprising" may refer to direct inclusion or indirect inclusion. Optionally, "comprising" mentioned in the embodiments of the disclosure may be replaced with "indicating" or "used for determining". For example, A comprises B may be replaced with A indicates B, or A is used to determine B.

In various embodiments of the disclosure, the sequence numbers of the above-mentioned processes do not imply a particular order of execution. The execution order of processes should be determined by their functions and internal logic, and should not constitute any limitation on the implementation process of the embodiments of the disclosure.

In the embodiments of the disclosure, the "protocol" may refer to a standard protocol or agreement in the communication field, for example, it may include the WiFi protocol and related protocols applied in future WiFi communication systems, which is not limited in this application.

In the several embodiments provided in the disclosure, it should be understood that the disclosed systems, apparatuses, and methods may be implemented in other ways. For example, the apparatus embodiments described above are merely illustrative. For example, the division of units is merely a logical functional division, and other divisions may exist in actual implementation. For example, multiple units or components may be combined or integrated into another system, or some features may be omitted or not performed. In addition, the mutual coupling or direct coupling or communication connections illustrated or discussed may be indirect coupling or communication connections through some interfaces, apparatuses, or units, and may be electrical, mechanical, or other forms.

Units described as separate components may or may not be physically separate. Components illustrated as units may or may not be physical units, i.e., they may be located in one place or distributed over multiple network units. Some or all of the units may be selected according to actual needs to achieve the objectives of the solutions of the embodiments.

In addition, functional units in the various embodiments of the disclosure may be integrated into one processing unit, or each unit may exist separately physically, or two or more units may be integrated into one unit.

In the above embodiments, they may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to the embodiments of the disclosure are generated in whole or in part. The computer may be a general-purpose computer, a special-purpose computer, a computer network, or other programmable device. The computer instructions may be stored in a computer-readable storage medium or transmitted from one computer-readable storage medium to another. For example, the computer instructions may be transmitted from a website, computer, server, or data center to another website, computer, server, or data center by wire (e.g., coaxial cable, optical fiber, digital subscriber line (DSL)) or wirelessly (e.g., infrared, wireless, microwave, etc.). The computer-readable storage medium may be any available medium that can be read by a computer or a data storage device such as a server or data center that includes one or more integrated available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above description is merely specific implementations of the disclosure, but the protection scope of the disclosure is not limited thereto. Any changes or substitutions that would readily occur to a person skilled in the art within the technical scope disclosed in the disclosure should be covered by the protection scope of the disclosure. Therefore, the protection scope of the disclosure should be subject to the protection scope of the claims.

## Claims

1. A wireless communication method, wherein the method comprises:
receiving, by a first device, a first frame sent by a second device;
wherein the first frame is used to indicate information related to out-of-order delivery in a block acknowledge mechanism.

2. The method according to claim 1, wherein
the first frame is used to accept or reject a first request, the first request being related to an out-of-order delivery request in the block acknowledge mechanism; and/or
the first frame is used to configure information related to out-of-order delivery in the block acknowledge mechanism.

3. The method according to claim 1 or 2, wherein the first frame comprises an add block acknowledgement (ADDBA) response frame.

4. The method according to any one of claims 1-3, wherein the method further comprises:
sending, by the first device, a second frame to the second device;
wherein the second frame is used to indicate information related to out-of-order delivery in the block acknowledge mechanism.

5. The method according to claim 4, wherein the first frame is responsive to the second frame.

6. The method according to claim 4 or 5, wherein the second frame comprises an ADDBA request frame.

7. The method according to any one of claims 1-6, wherein the information related to out-of-order delivery in the block acknowledge mechanism comprises one or more of:
whether to enable the out-of-order delivery;
an out-of-order delivery parameter.

8. The method according to claim 7, wherein the first frame comprises first information, and the first information indicates whether the information related to out-of-order delivery in the block acknowledge mechanism comprises the out-of-order delivery parameter.

9. The method according to claim 7 or 8, wherein the out-of-order delivery parameter comprises one or more of:
a processing mode, used to indicate whether a data unit of a first traffic identifier (TID) adopts multiple sequence number (SN) spaces;
a first quantity, used to indicate the quantity of SN spaces adopted by the data unit of the first TID;
a first indication, used to indicate whether to distinguish processing of the data unit of the first TID according to a tag of the data unit;
a second indication, used to indicate whether to distinguish processing of the data unit of the first TID through multiple SN spaces according to the tag of the data unit;
a third indication, used to indicate whether, in a case that an SN of a received first data unit is greater than an SN of an unreceived second data unit, the first data unit can be delivered to a next medium access control (MAC) procedure;
a condition parameter, used to indicate a first condition, wherein in a case that the first condition is satisfied, the first data unit can be delivered to the next MAC procedure.

10. The method according to claim 9, wherein the condition parameter comprises one or more of:
a first threshold, used to indicate an SN deviation threshold;
second information, used to indicate whether the first condition is related to the first threshold;
a second threshold, used to indicate a buffer waiting threshold;
third information, used to indicate whether the first condition is related to the second threshold;
a priority indication, used to indicate whether to prioritize delivery of a data unit with a target tag.

11. The method according to claim 10, wherein in a case that the first condition is related to the first threshold, the first condition comprises: a difference between the SN of the first data unit and the SN of the second data unit is less than or equal to the first threshold.

12. The method according to claim 11, wherein the second data unit comprises: a data unit with a smallest SN or a data unit with a largest SN among unreceived data units.

13. The method according to any one of claims 10-12, wherein in a case that the first condition is related to the second threshold, the first condition comprises: a buffer waiting time for the first data unit is greater than or equal to the second threshold.

14. The method according to any one of claims 10-13, wherein in a case that the first condition is related to the priority indication, the first condition comprises: the first data unit comprises a data unit with a target tag.

15. The method according to any one of claims 1-14, wherein in a case that a data unit of the same TID adopts multiple SN spaces, the multiple SN spaces comprise a second SN space and a third SN space, the second SN space being used for a data unit with a target tag, and the third SN space being used for a data unit without the target tag.

16. The method according to any one of claims 10-15, wherein the target tag comprises: a low-latency tag; and/or, an urgent delivery tag.

17. The method according to any one of claims 1-16, wherein a third data unit interacted between the first device and the second device belongs to a first SN space, a receive window of the first SN space is a first window, and the first window corresponds to a first delivery record, the first delivery record being used to record whether a data unit in the first window has been delivered to a next MAC procedure.

18. The method according to claim 17, wherein the first delivery record is represented by a first bitmap, and a target bit of the first bitmap is used to indicate whether the third data unit has been delivered to the next MAC procedure.

19. The method according to claim 18, wherein a bit corresponding to a lowest SN in the first bitmap is initialized to a first parameter, the first parameter being initialized to a value of a starting SN field corresponding to the first SN space, a bit corresponding to a highest SN in the first bitmap is initialized to a second parameter, the second parameter being initialized to a value of the first parameter + a value of a third parameter **-** 1, and the third parameter being the smaller of a length of the first bitmap and a value of a buffer size field corresponding to the first SN space.

20. The method according to any one of claims 17-19, wherein in a case that the third data unit is received, if the first delivery record indicates that the third data unit has been delivered to the next MAC procedure, the third data unit is discarded.

21. The method according to any one of claims 17-20, wherein the first SN space corresponds to the first buffer, and if the first delivery record indicates that the third data unit has not been delivered to the next MAC procedure, and the third data unit satisfies a first condition, the third data unit in the first buffer is delivered to the next MAC procedure.

22. The method according to any one of claims 17-21, wherein in response to the third data unit being delivered to the next MAC procedure, the first delivery record is updated to indicate that the third data unit has been delivered to the next MAC procedure.

23. The method according to any one of claims 1-22, wherein in a case that a data unit of the first TID adopts N SN spaces, the first frame comprises N block acknowledge parameter set fields, the N SN spaces correspond one-to-one to the N block acknowledge parameter set fields, and N being a positive integer.

24. The method according to any one of claims 1-23, wherein the information related to out-of-order delivery in the block acknowledge mechanism is carried by a first element.

25. The method according to any one of claims 1-24, wherein the out-of-order delivery is used for transmission of a data unit, and the data unit comprises one or more of: a medium access control service data unit (MSDU), an aggregated medium access control service data unit (A-MSDU), or a medium access control protocol data unit (MPDU).

26. A wireless communication method, wherein the method comprises:
sending, by a second device, a first frame to a first device;
wherein the first frame is used to indicate information related to out-of-order delivery in a block acknowledge mechanism.

27. The method according to claim 26, wherein
the first frame is used to accept or reject a first request, the first request being related to an out-of-order delivery request in the block acknowledge mechanism; and/or
the first frame is used to configure information related to out-of-order delivery in the block acknowledge mechanism.

28. The method according to claim 26 or 27, wherein the first frame comprises an add block acknowledgement (ADDBA) response frame.

29. The method according to any one of claims 26-28, wherein the method further comprises:
receiving, by the second device, a second frame sent by the first device;
wherein the second frame is used to indicate information related to out-of-order delivery in the block acknowledge mechanism.

30. The method according to claim 29, wherein the first frame is determined based on the second frame.

31. The method according to claim 29 or 30, wherein the second frame comprises an ADDBA request frame.

32. The method according to any one of claims 26-31, wherein the information related to out-of-order delivery in the block acknowledge mechanism comprises one or more of:
whether to enable the out-of-order delivery;
an out-of-order delivery parameter.

33. The method according to claim 32, wherein the first frame comprises first information, and the first information indicates whether the information related to out-of-order delivery in the block acknowledge mechanism comprises the out-of-order delivery parameter.

34. The method according to claim 32 or 33, wherein the out-of-order delivery parameter comprises one or more of:
a processing mode, used to indicate whether a data unit of a first traffic identifier (TID) adopts multiple sequence number (SN) spaces;
a first quantity, used to indicate the quantity of SN spaces adopted by the data unit of the first TID;
a first indication, used to indicate whether to distinguish processing of the data unit of the first TID according to a tag of the data unit;
a second indication, used to indicate whether to distinguish processing of the data unit of the first TID through multiple SN spaces according to the tag of the data unit;
a third indication, used to indicate whether, in a case that an SN of a received first data unit is greater than an SN of an unreceived second data unit, the first data unit can be delivered to a next medium access control (MAC) procedure;
a condition parameter, used to indicate a first condition, wherein in a case that the first condition is satisfied, the first data unit can be delivered to the next MAC procedure.

35. The method according to claim 34, wherein the condition parameter comprises one or more of:
a first threshold, used to indicate an SN deviation threshold;
second information, used to indicate whether the first condition is related to the first threshold;
a second threshold, used to indicate a buffer waiting threshold;
third information, used to indicate whether the first condition is related to the second threshold;
a priority indication, used to indicate whether to prioritize delivery of a data unit with a target tag.

36. The method according to claim 35, wherein in a case that the first condition is related to the first threshold, the first condition comprises: a difference between the SN of the first data unit and the SN of the second data unit is less than or equal to the first threshold.

37. The method according to claim 36, wherein the second data unit comprises: a data unit with a smallest SN or a data unit with a largest SN among unreceived data units.

38. The method according to any one of claims 35-37, wherein in a case that the first condition is related to the second threshold, the first condition comprises: a buffer waiting time for the first data unit is greater than or equal to the second threshold.

39. The method according to any one of claims 35-38, wherein in a case that the first condition is related to the priority indication, the first condition comprises: the first data unit comprises a data unit with a target tag.

40. The method according to any one of claims 26-39, wherein in a case that a data unit of the same TID adopts multiple SN spaces, the multiple SN spaces comprise a second SN space and a third SN space, the second SN space being used for a data unit with a target tag, and the third SN space being used for a data unit without the target tag.

41. The method according to any one of claims 35-40, wherein the target tag comprises: a low-latency tag; and/or, an urgent delivery tag.

42. The method according to any one of claims 26-41, wherein a third data unit interacted between the first device and the second device belongs to a first SN space, a receive window of the first SN space is a first window, and the first window corresponds to a first delivery record, the first delivery record being used to record whether a data unit in the first window has been delivered to a next MAC procedure.

43. The method according to claim 42, wherein the first delivery record is represented by a first bitmap, and a target bit of the first bitmap is used to indicate whether the third data unit has been delivered to the next MAC procedure.

44. The method according to claim 43, wherein a bit corresponding to a lowest SN in the first bitmap is initialized to a first parameter, the first parameter being initialized to a value of a starting SN field corresponding to the first SN space, a bit corresponding to a highest SN in the first bitmap is initialized to a second parameter, the second parameter being initialized to a value of the first parameter + a value of a third parameter **-** 1, and the third parameter being the smaller of a length of the first bitmap and a value of a buffer size field corresponding to the first SN space.

45. The method according to any one of claims 42-44, wherein in a case that the third data unit is received, if the first delivery record indicates that the third data unit has been delivered to the next MAC procedure, the third data unit is discarded.

46. The method according to any one of claims 42-45, wherein the first SN space corresponds to the first buffer, and if the first delivery record indicates that the third data unit has not been delivered to the next MAC procedure, and the third data unit satisfies a first condition, the third data unit in the first buffer is delivered to the next MAC procedure.

47. The method according to any one of claims 42-46, wherein in response to the third data unit being delivered to the next MAC procedure, the first delivery record is updated to indicate that the third data unit has been delivered to the next MAC procedure.

48. The method according to any one of claims 26-47, wherein in a case that a data unit of the first TID adopts N SN spaces, the first frame comprises N block acknowledge parameter set fields, the N SN spaces correspond one-to-one to the N block acknowledge parameter set fields, and N being a positive integer.

49. The method according to any one of claims 26-48, wherein the information related to out-of-order delivery in the block acknowledge mechanism is carried by a first element.

50. The method according to any one of claims 26-49, wherein the out-of-order delivery is used for transmission of a data unit, and the data unit comprises one or more of: a medium access control service data unit (MSDU), an aggregated medium access control service data unit (A-MSDU), or a medium access control protocol data unit (MPDU).

51. A wireless communication device, being a first device and comprising:
a first receiving unit, configured to receive a first frame sent by a second device;
wherein the first frame is used to indicate information related to out-of-order delivery in a block acknowledge mechanism.

52. The communication device according to claim 51, wherein
the first frame is used to accept or reject a first request, the first request being related to an out-of-order delivery request in the block acknowledge mechanism; and/or
the first frame is used to configure information related to out-of-order delivery in the block acknowledge mechanism.

53. The communication device according to claim 51 or 52, wherein the first frame comprises an add block acknowledgement (ADDBA) response frame.

54. The communication device according to any one of claims 51-53, wherein the communication device is further configured to:
send a second frame to the second device;
wherein the second frame is used to indicate information related to out-of-order delivery in the block acknowledge mechanism.

55. The communication device according to claim 54, wherein the first frame is responsive to the second frame.

56. The communication device according to claim 54 or 55, wherein the second frame comprises an ADDBA request frame.

57. The communication device according to any one of claims 51-56, wherein the information related to out-of-order delivery in the block acknowledge mechanism comprises one or more of:
whether to enable the out-of-order delivery;
an out-of-order delivery parameter.

58. The communication device according to claim 57, wherein the first frame comprises first information, and the first information indicates whether the information related to out-of-order delivery in the block acknowledge mechanism comprises the out-of-order delivery parameter.

59. The communication device according to claim 57 or 58, wherein the out-of-order delivery parameter comprises one or more of:
a processing mode, used to indicate whether a data unit of a first traffic identifier (TID) adopts multiple sequence number (SN) spaces;
a first quantity, used to indicate the number of SN spaces adopted by the data unit of the first TID;
a first indication, used to indicate whether to distinguish processing of the data unit of the first TID according to a tag of the data unit;
a second indication, used to indicate whether to distinguish processing of the data unit of the first TID through multiple SN spaces according to the tag of the data unit;
a third indication, used to indicate whether, in a case that an SN of a received first data unit is greater than an SN of an unreceived second data unit, the first data unit can be delivered to a next medium access control (MAC) procedure;
a condition parameter, used to indicate a first condition, wherein in a case that the first condition is satisfied, the first data unit can be delivered to the next (MAC) procedure.

60. The communication device according to claim 59, wherein the condition parameter comprises one or more of:
a first threshold, used to indicate an SN deviation threshold;
second information, used to indicate whether the first condition is related to the first threshold;
a second threshold, used to indicate a buffer waiting threshold;
third information, used to indicate whether the first condition is related to the second threshold;
a priority indication, used to indicate whether to prioritize delivery of a data unit with a target tag.

61. The communication device according to claim 60, wherein in a case that the first condition is related to the first threshold, the first condition comprises: a difference between the SN of the first data unit and the SN of the second data unit is less than or equal to the first threshold.

62. The communication device according to claim 61, wherein the second data unit comprises: a data unit with a smallest SN or a data unit with a largest SN among unreceived data units.

63. The communication device according to any one of claims 60-62, wherein in a case that the first condition is related to the second threshold, the first condition comprises: a buffer waiting time for the first data unit is greater than or equal to the second threshold.

64. The communication device according to any one of claims 60-63, wherein in a case that the first condition is related to the priority indication, the first condition comprises: the first data unit comprises a data unit with a target tag.

65. The communication device according to any one of claims 51-64, wherein in a case that a data unit of the same TID adopts multiple SN spaces, the multiple SN spaces comprise a second SN space and a third SN space, the second SN space being used for a data unit with a target tag, and the third SN space being used for a data unit without the target tag.

66. The communication device according to any one of claims 60-65, wherein the target tag comprises: a low-latency tag; and/or, an urgent delivery tag.

67. The communication device according to any one of claims 51-66, wherein a third data unit interacted between the first device and the second device belongs to a first SN space, a receive window of the first SN space is a first window, and the first window corresponds to a first delivery record, the first delivery record being used to record whether a data unit in the first window has been delivered to a next MAC procedure.

68. The communication device according to claim 67, wherein the first delivery record is represented by a first bitmap, and a target bit of the first bitmap is used to indicate whether the third data unit has been delivered to the next MAC procedure.

69. The communication device according to claim 68, wherein a bit corresponding to a lowest SN in the first bitmap is initialized to a first parameter, the first parameter being initialized to a value of a starting SN field corresponding to the first SN space, a bit corresponding to a highest SN in the first bitmap is initialized to a second parameter, the second parameter being initialized to a value of the first parameter + a value of a third parameter **-** 1, and the third parameter being the smaller of a length of the first bitmap and a value of a buffer size field corresponding to the first SN space.

70. The communication device according to any one of claims 67-69, wherein in a case that the third data unit is received, if the first delivery record indicates that the third data unit has been delivered to the next MAC procedure, the third data unit is discarded.

71. The communication device according to any one of claims 67-70, wherein the first SN space corresponds to the first buffer, and if the first delivery record indicates that the third data unit has not been delivered to the next MAC procedure, and the third data unit satisfies a first condition, the third data unit in the first buffer is delivered to the next MAC procedure.

72. The communication device according to any one of claims 67-71, wherein in response to the third data unit being delivered to the next MAC procedure, the first delivery record is updated to indicate that the third data unit has been delivered to the next MAC procedure.

73. The communication device according to any one of claims 51-72, wherein in a case that a data unit of the first TID adopts N SN spaces, the first frame comprises N block acknowledge parameter set fields, the N SN spaces correspond one-to-one to the N block acknowledge parameter set fields, and N being a positive integer.

74. The communication device according to any one of claims 51-73, wherein the information related to out-of-order delivery in the block acknowledge mechanism is carried by a first element.

75. The communication device according to any one of claims 51-74, wherein the out-of-order delivery is used for transmission of a data unit, and the data unit comprises one or more of: a medium access control service data unit (MSDU), an aggregated medium access control service data unit (A-MSDU), or a medium access control protocol data unit (MPDU).

76. A wireless communication device, being a second device and comprising:
a first sending unit, configured to send a first frame to a first device;
wherein the first frame is used to indicate information related to out-of-order delivery in a block acknowledge mechanism.

77. The communication device according to claim 76, wherein
the first frame is used to accept or reject a first request, the first request being related to an out-of-order delivery request in the block acknowledge mechanism; and/or
the first frame is used to configure information related to out-of-order delivery in the block acknowledge mechanism.

78. The communication device according to claim 76 or 77, wherein the first frame comprises an add block acknowledgement (ADDBA) response frame.

79. The communication device according to any one of claims 76-78, wherein the communication device further comprises:
receiving, by the second device, a second frame sent by the first device;
wherein the second frame is used to indicate information related to out-of-order delivery in the block acknowledge mechanism.

80. The communication device according to claim 79, wherein the first frame is determined based on the second frame.

81. The communication device according to claim 79 or 80, wherein the second frame comprises an ADDBA request frame.

82. The communication device according to any one of claims 76-81, wherein the information related to out-of-order delivery in the block acknowledge mechanism comprises one or more of:
whether to enable the out-of-order delivery;
an out-of-order delivery parameter.

83. The communication device according to claim 82, wherein the first frame comprises first information, and the first information indicates whether the information related to out-of-order delivery in the block acknowledge mechanism comprises the out-of-order delivery parameter.

84. The communication device according to claim 82 or 83, wherein the out-of-order delivery parameter comprises one or more of:
a processing mode, used to indicate whether a data unit of a first traffic identifier (TID) adopts multiple sequence number (SN) spaces;
a first quantity, used to indicate the number of SN spaces adopted by the data unit of the first TID;
a first indication, used to indicate whether to distinguish processing of the data unit of the first TID according to a tag of the data unit;
a second indication, used to indicate whether to distinguish processing of the data unit of the first TID through multiple SN spaces according to the tag of the data unit;
a third indication, used to indicate whether, in a case that an SN of a received first data unit is greater than an SN of an unreceived second data unit, the first data unit can be delivered to a next medium access control (MAC) procedure;
a condition parameter, used to indicate a first condition, wherein in a case that the first condition is satisfied, the first data unit can be delivered to the next (MAC) procedure.

85. The communication device according to claim 84, wherein the condition parameter comprises one or more of:
a first threshold, used to indicate an SN deviation threshold;
second information, used to indicate whether the first condition is related to the first threshold;
a second threshold, used to indicate a buffer waiting threshold;
third information, used to indicate whether the first condition is related to the second threshold;
a priority indication, used to indicate whether to prioritize delivery of a data unit with a target tag.

86. The communication device according to claim 85, wherein in a case that the first condition is related to the first threshold, the first condition comprises: a difference between the SN of the first data unit and the SN of the second data unit is less than or equal to the first threshold.

87. The communication device according to claim 86, wherein the second data unit comprises: a data unit with a smallest SN or a data unit with a largest SN among unreceived data units.

88. The communication device according to any one of claims 85-87, wherein in a case that the first condition is related to the second threshold, the first condition comprises: a buffer waiting time for the first data unit is greater than or equal to the second threshold.

89. The communication device according to any one of claims 85-88, wherein in a case that the first condition is related to the priority indication, the first condition comprises: the first data unit comprises a data unit with a target tag.

90. The communication device according to any one of claims 76-89, wherein in a case that a data unit of the same TID adopts multiple SN spaces, the multiple SN spaces comprise a second SN space and a third SN space, the second SN space being used for a data unit with a target tag, and the third SN space being used for a data unit without the target tag.

91. The communication device according to any one of claims 85-90, wherein the target tag comprises: a low-latency tag; and/or, an urgent delivery tag.

92. The communication device according to any one of claims 76-91, wherein a third data unit interacted between the first device and the second device belongs to a first SN space, a receive window of the first SN space is a first window, and the first window corresponds to a first delivery record, the first delivery record being used to record whether a data unit in the first window has been delivered to a next MAC procedure.

93. The communication device according to claim 92, wherein the first delivery record is represented by a first bitmap, and a target bit of the first bitmap is used to indicate whether the third data unit has been delivered to the next MAC procedure.

94. The communication device according to claim 93, wherein a bit corresponding to a lowest SN in the first bitmap is initialized to a first parameter, the first parameter being initialized to a value of a starting SN field corresponding to the first SN space, a bit corresponding to a highest SN in the first bitmap is initialized to a second parameter, the second parameter being initialized to a value of the first parameter + a value of a third parameter **-** 1, and the third parameter being the smaller of a length of the first bitmap and a value of a buffer size field corresponding to the first SN space.

95. The communication device according to any one of claims 92-94, wherein in a case that the third data unit is received, if the first delivery record indicates that the third data unit has been delivered to the next MAC procedure, the third data unit is discarded.

96. The communication device according to any one of claims 92-95, wherein the first SN space corresponds to the first buffer, and if the first delivery record indicates that the third data unit has not been delivered to the next MAC procedure, and the third data unit satisfies a first condition, the third data unit in the first buffer is delivered to the next MAC procedure.

97. The communication device according to any one of claims 92-96, wherein in response to the third data unit being delivered to the next MAC procedure, the first delivery record is updated to indicate that the third data unit has been delivered to the next MAC procedure.

98. The communication device according to any one of claims 76-97, wherein in a case that a data unit of the first TID adopts N SN spaces, the first frame comprises N block acknowledge parameter set fields, the N SN spaces correspond one-to-one to the N block acknowledge parameter set fields, and N being a positive integer.

99. The communication device according to any one of claims 76-98, wherein the information related to out-of-order delivery in the block acknowledge mechanism is carried by a first element.

100. The communication device according to any one of claims 76-99, wherein the out-of-order delivery is used for transmission of a data unit, and the data unit comprises one or more of: a medium access control service data unit (MSDU), an aggregated medium access control service data unit (A-MSDU), or a medium access control protocol data unit (MPDU).

101. A communication device, wherein the communication device comprises a memory and a processor, the memory being configured to store a program, and the processor being configured to invoke the program in the memory to cause the communication device to perform the method according to any one of claims 1-100.

102. An apparatus, wherein the apparatus comprises a processor configured to invoke a program from a memory to cause the apparatus to perform the method according to any one of claims 1-100.

103. A chip, wherein the chip comprises a processor configured to invoke a program from a memory to cause a device installed with the chip to perform the method according to any one of claims 1-100.

104. A computer-readable storage medium, wherein a program is stored thereon, the program causing a computer to perform the method according to any one of claims 1-100.

105. A computer program product, wherein the computer program product comprises a program, the program causing a computer to perform the method according to any one of claims 1-100.

106. A computer program, wherein the computer program causes a computer to perform the method according to any one of claims 1-100.
